# EUROPÄISCHE PATENTSCHRIFT

(11) **EP 4 558 425 B1**
(45) Veröffentlichungstag und Bekanntmachung des Hinweises auf die Patenterteilung: **21.10.2026**
(21) Anmeldenummer: 23745149.7
(22) Anmeldetag: 21.07.2023
(51) Int. Cl.: B65G 1/04, B65G 1/137, B65G 47/61, B61B 3/02

(54) **BAKENGESTÜTZTE KOMMUNIKATION BEI EINEM MIT ZUMINDEST TEILAUTONOM FAHRENDEN HÄNGETASCHEN AUSGESTATTETEN HÄNGETASCHENLAGER**
BEACON-BASED COMMUNICATION IN A HANGING-BAG WAREHOUSE PROVIDED WITH AT LEAST PARTIALLY AUTONOMOUSLY MOVING HANGING BAGS
COMMUNICATION BASÉE SUR UNE BALISE DANS UN ENTREPÔT DE SACS SUSPENDUS POURVU DE SACS SUSPENDUS SE DÉPLAÇANT AU MOINS PARTIELLEMENT DE MANIÈRE AUTONOME

(30) Priorität: 22.07.2022 DE 102022002691; 24.02.2023 DE 102023000660
(43) Veröffentlichungstag der Anmeldung: 28.05.2025
(73) Patentinhaber: EMHS GmbH, 75172 Pforzheim (DE)
(72) Erfinder: BRADE, Rene, 75031 Eppingen (DE); GEYER, Dominik, 75210 Keltern (DE); HERZOG, Vincent David, 78462 Konstanz (DE); HERZOG-LANG, Viktor, 75210 Keltern (DE); LUCKEY, Robin, 23552 Lübeck (DE); MÜLLER, Frederic, 76131 Karlsruhe (DE); PFISTER, Kai, 23558 Lübeck (DE); THEURER, Felix, 75173 Pforzheim (DE)
(74) Vertreter: Burger, Hannes Alfred
(86) Internationale Anmeldenummer: PCT/EP2023/070289
(87) Internationale Veröffentlichungsnummer: WO 2024/018057

(56) Entgegenhaltungen:
- DE-A1- 102013 205 397
- DE-A1- 102018 128 417
- JP-A- 2018 041 343
- JP-B2- 5 105 246
- KR-A- 20200 072 140
- US-A1- 2021 047 127

## Beschreibung

Die Erfindung betrifft ein mit fahrenden Hängetaschen ausgestattetes Hängetaschenlager und ein Verfahren zum Betreiben dieses Hängetaschenlagers.

In automatisierten Warenlagern, Produktionsstätten und beim Warentransport wie zum Beispiel im Versandhandel ist es erforderlich, Fördergut möglichst automatisiert in Fördergutbehältern aufzunehmen und aus diesen wieder auszuladen. In diesen Fördergutbehältern können die Waren vor ihrer Auslieferung gelagert werden und gelangen so an eine Station, in der sie für den Weitertransport zum Kunden verpackt werden. Der Transport innerhalb der Lager erfolgt üblicherweise über Hängefördereinrichtungen. Die Fördergutbehälter sind dabei meist Taschen, die wie Stoffbeutel gefertigt sind und oben mit einer Art Drahtbügel in ein Schienensystem eingehängt sind. Ein derartiger Fördergutbehälter ist beispielweise aus der WO 2014/012965 A1 bekannt. Über ein Gestänge werden dessen Seitenwandelemente so angesteuert, dass die über einen Verbindungsbereich miteinander verbundenen Seitenwandelemente aufgeklappt werden können. Im Bereich einer Beladestation werden die Behälter zudem in eine horizontale oder geneigte Stellung überführt.

Vergleichbare Fördergutbehälter und zugehörige Hängefördereinrichtungen sind beispielweise aus der DE 10 2004 018 569 A1, EP 2 130 968 A1 oder EP 2 196 415 A bekannt. Die dort beschriebenen Transporttaschen bestehen aus flexiblen Materialien in Form einer Schlaufe, in der das Fördergut gehalten wird. Zum Beladen werden diese Transporttaschen von oben geöffnet, um das Fördergut in die Schlaufe einbringen zu können. Ein Entladen erfolgt dadurch, dass das Fördergut entweder seitlich aus der Schlaufe entnommen oder ausgestoßen wird oder beispielweise gemäß der EP 2 130 968 A1 die Schlaufe nach unten geöffnet wird. Ferner ist aus der DE 103 54 419 A1 ein Fördergutträger bekannt, der eine relativ steife und flache Kunststoffwand mit einem Ausschnitt zum Be- und Entladen mit Fördergut aufweist.

Andere Fördergutbehälter sind gefertigt wie hängende flache Wannen aus Kunststoff, die einseitig mit elastischen Stoffen bezogen sind, welche das Fördergut einklemmen.

Es ist bekannt, solche Fördergutbehälter mechanisiert zu beladen und manuell wieder zu entladen. Ein Transporttakt richtet sich nach dem langsamsten Vorgang, der auch von der Menge an transportiertem Fördergut abhängt. Insbesondere eine hohe Anzahl an einzelnen Fördergütern kann das Be- und/oder Entladen verlangsamen. Beispielweise können das Entladen und/oder das Zusammenfügen zerlegter Transportbehälter den maximal möglichen Transporttakt bestimmen.

Die EP 2 686 258 B1 betrifft eine Hängefördereinrichtung mit einer Transporttasche zum Transport von Fördergut und eine Entladestation zur automatischen Entladung eines Förderguts aus der Transporttasche. Die Transporttasche weist einen horizontalen Boden auf, auf dem das Fördergut für Transportzwecke gelagert werden kann. Der Boden wirkt mit einer Hubeinrichtung zusammen, die eingerichtet ist, den Boden der mit mindestens einem Fördergut beladenen Transporttasche, wenn sich die Transporttasche in einer Entladestellung befindet, in einer vertikalen Richtung derart anzuheben, dass das mindestens eine Fördergut mittels einer Schubeinrichtung durch eine Stirnseite der Transporttasche zentral ausschiebbar ist. Die Schubeinrichtung weist einen Schieber auf, der von einer gegenüberliegenden Stirnseite der Transporttasche in einen Aufbewahrungsraum der Transporttasche eingreift, wo sich das mindestens eine Fördergut befindet, wenn der Boden angehoben ist. Zum Entladen sind also die zwei gegenüberliegenden geöffneten Stirnseiten, der in der vertikalen Richtung anhebbare Boden sowie der durch eine der Stirnseiten durchgreifende Schieber der Schubeinrichtung erforderlich.

Aus der DE 20 2017 100 206 U1 ist ein Fördergutbehälter für eine Hängefördereinrichtung zum Transportieren von Fördergut bekannt, der zwischen einer Öffnungsstellung und einer Schließstellung verstellbar ist. Der Fördergutbehälter weist einen Boden auf, der einer Auswerfvorrichtung mechanisch zugeordnet ist. Mittels der Auswerfvorrichtung ist der Boden zwischen einer Transportstellung, in der das Fördergut innerhalb des Fördergutbehälters lagerbar ist, und einer Auswerfstellung, in der das Fördergut aus dem Fördergutbehälter auswerfbar ist, verstellbar.

Aus der DE 10 2018 105 795 A1 sind ein Verfahren zum Entladen oder Beladen eines auf einem biegeschlaffen Material eines Fördergutbehälters aufgenommenen Förderguts mittels einer Entladestation oder einer Beladestation einer Hängefördereinrichtung sowie ein(e) verfahrensgemäße(r) Fördergutbehälter, Entladestation und Hängefördereinrichtung bekannt.

Die DE 10 2018 128 417 A1 beschreibt ein Hängetaschenlager gemäß dem Oberbegriff des Anspruchs 1 und ein Verfahren gemäß dem Oberbegriff des Anspruchs 12. Das Verfahren umfasst die Schritte: Bereitstellen eines Schienennetzes einer Sortieranlage, Bereitstellen eines auf dem Schienennetz abrollenden Rolladapters für eine Sortertasche, Bereitstellen einer elektrischen Antriebsenergie für den Rolladapter, Wandeln der bereitgestellten elektrischen Antriebsenergie mittels des Rolladapters selbst in eine Bewegungsenergie zum Transportieren der Sortertasche. Die Rolladapter dienen zum Aufhängen und Bewegen der Sortertaschen. Dazu weisen diese jeweils ein Fahrwerk mit zwei koaxial drehenden Rädern, eine zwischen den Rädern angeordnete und von diesen getragene Aufhängung, an der die Sortertasche aufgehängt ist, einen elektrischen Antrieb zum Antreiben der Räder und eine Steuervorrichtung oder Teilsteuervorrichtung zum autonomen oder zumindest teilautonomen Steuern des Rolladapters entlang eines aus einer Vielzahl an Fahrwegen ausgewählten Fahrwegs auf.

Ferner ist es bekannt, dass industrielle Gegenstände nach einem Netzwerkstandard untereinander kommunizieren, was auch als industrielles Internet der Sachen (IIoT) bezeichnet wird.

Ausgehend von diesem Stand der Technik, liegt der vorliegenden Erfindung die Aufgabe zugrunde, bei einem eine hohe Anzahl an autonom oder zumindest teilautonom fahrbaren Hängetaschen aufweisenden Hängetaschenlager, diese, insbesondere bis zu 1,5 Millionen der Hängetaschen, einzeln bei einer möglichst kleinen Sendeleistungsdichte und einer möglichst hohen Datenrate ansprechen zu können, insbesondere die Vielzahl an in dem Hängetaschenlager vorhandenen autonom fahrbaren Hängetaschen zu koordinieren, vorzugsweise Warenflüsse von in den Hängetaschen aufgenommenen Lagergütern mit einem möglichst geringen Aufwand zu steuern.

Die Aufgabe wird mit einem Hängetaschenlager gemäß Anspruch 1 gelöst.

Das Hängetaschenlager zum Lagern, Kommissionieren, Sortieren und Auslagern von Lagergütern umfasst eine Vielzahl an Rolladaptern und an den Rolladaptern aufhängbaren oder aufgehängten Hängetaschen, wobei die Rolladapter oder die Hängetaschen jeweils eine mitfahrende Längs- und Querdynamiksteuerung aufweisen und wobei in die Hängetaschen jeweils zumindest eines der Lagergüter aufnehmbar und wieder auslagerbar ist, ein Netz, auf dem die Vielzahl an Hängetaschen oder an den Rolladaptern aufgehängten Hängetaschen mittels der jeweils mitfahrenden Längs- und Querdynamiksteuerung autonom oder zumindest teilautonom fahrbar sind, eine Steuereinrichtung, mittels der das Hängetaschenlager steuerbar und/oder überwachbar ist und/oder das Lagern, Kommissionieren und Sortieren der Lagergüter steuerbar und eine Reihenfolge der Lagergüter für eine Auslagerung der Lagergüter vorgebbar ist, eine erste Kommunikationsanordnung, mittels der ein Kommunikationsweg A zwischen der Steuereinrichtung und einem Adressaten wie einer beliebigen, einzelnen der Hängetaschen aufbaubar ist, und eine zweite Kommunikationsanordnung, mittels der ein vom Kommunikationsweg A unabhängiger weiterer Kommunikationsweg B zwischen der Steuereinrichtung und dem Adressaten aufbaubar ist, wobei die Hängetaschen und/oder die Rolladapter und/oder der Adressat mittels und wahlweise durch die Verwendung von einem oder zwei der zwei Kommunikationswege A und B durch die Steuereinrichtung jeweils wahlfrei adressierbar, ansprechbar und/oder steuerbar sind/ist, wobei der Kommunikationsweg A über eine erste größere Distanz aufbaubar und der Kommunikationsweg B über eine zweite kleinere Distanz aufbaubar ist und die Kommunikationswege A und B für diese unterschiedlichen Distanzen ausgelegt sind.

Durch die zwei voneinander unabhängigen Kommunikationswege können insgesamt mehr Botschaften an die Hängeaschen gesendet und von diesen empfangen werden. Die Kommunikationswege können flexibel und abhängig von einem Ort der jeweiligen Hängetasche innerhalb des Hängetaschenlagers verwendet werden. Dadurch können eine Sendeleistungsdichte minimiert und eine Datenrate maximiert werden. So kann eine besonders große Anzahl an Hängetaschen, vorzugsweise mehr als 10.000, insbesondere bis zu circa 1.000.000, vorzugsweise bis zu 1.500.000, vorzugsweise mit einer Dichte beim Lagern und/oder bei einer Kolonnenfahrt mit bis zu 20, insbesondere zwischen 10 und 20, Hängetaschen pro Meter, angesprochen und gesteuert werden. Einmal angesprochen bzw. mit einer Anweisung versorgt, können die einzelnen Hängetaschen ohne weitere Botschaften autonom oder zumindest teilautonom durch das Hängetaschenlager fahren. Sobald die Anweisung erledigt ist, kann eine verschleißarme und/oder energiesparende Wartephase/Ruhephase der angesprochenen Hängetasche erfolgen und später oder direkt im Anschluss eine neue Botschaft mit einer neuen Anweisung gesendet und vom Adressaten empfangen werden.

Bevorzugt ist es möglich, dass die Kommunikationswege A und B eine Hängetasche mit einer mitfahrenden und für den Kommunikationsweg A eingerichteten ersten Sendeempfangsvorrichtung sowie einer mitfahrenden und für den Kommunikationsweg B eingerichteten zweiten Sendeempfangsvorrichtung, eine Steuereinrichtung zum zentralen Steuern des Hängetaschenlagers, Generieren, Aussenden und Empfangen von Botschaften über die Kommunikationswege A und B, eine Vielzahl von Zwischensteuerungen, die der Steuereinrichtung, vorzugsweise festverdrahtet, nachgeschaltet, jeweils mit einer eigenen Rechenkapazität ausgestattet und für den Kommunikationsweg A eingerichtet sind, ein Cluster von zwei bis 10, vorzugsweise zwei bis sechs, bevorzugt vier, Baken I, das einer der Zwischensteuerungen nachgeschaltet ist, vorzugsweise fest verdrahtet, wobei die Baken I jeweils für den Kommunikationsweg A eingerichtet sind, ein Cluster von zwei bis 10, vorzugsweise zwei bis sechs, bevorzugt drei, Baken II, das einer der Baken I nachgeschaltet ist, wobei die Baken II jeweils für den Kommunikationsweg A eingerichtet sind, und/oder eine Vielzahl von Baken III, die der Steuereinrichtung nachgeschaltet, vorzugsweise festverdrahtet, und für den Kommunikationsweg B eingerichtet sind.

Das Cluster der Baken I ist vorzugsweise an dem Hängetaschenlager, insbesondere an einem Randbereich angebracht. Dadurch können die Hängetaschen im gesamten Hängetaschenlager von dem Randbereich in das Innere mit vergleichsweise kurzen Strecken, insbesondere Funkstrecken, erreicht bzw. adressiert werden. Dazu kann eine Auswahl der entsprechenden der Baken I so erfolgen, dass sich eine möglichst kurze Distanz zwischen der Bake I und dem Adressaten ergibt. Es ist denkbar, das Cluster der Baken I als eine Baueinheit vorzusehen, insbesondere in einem gemeinsamen Gehäuse unterzubringen. So kann ein Verdrahtungsaufwand eingespart werden. Von den Baken I zu den Baken II kann der weitere Verlauf des jeweiligen Kommunikationswegs drahtlos über eine Strecke, insbesondere Funkstrecke erfolgen, wobei die jeweilige Strecke bevorzugt immer identisch etablierbar ist, sodass ein Auswahlaufwand der einzelnen Elemente des Kommunikationswegs A verkleinert werden kann. Es muss also lediglich ermittelt werden, zu welcher der Baken II der Adressat den geringsten Abstand aufweist. Dorthin verläuft dann der Kommunikationsweg A entweder direkt oder über eine beliebige Anzahl weiterer der Hängetaschen als Mittler. Von der jeweiligen Bake II zu der zentralen Steuervorrichtung läuft dann der Kommunikationsweg über die vorausgewählte bzw. bevorzugt etablierbare Strecke zu einer zugeordneten der Baken I und über die Festverdrahtungen über die zugeordnete Zwischensteuerung und von dort zur zentralen Steuereinrichtung.

Alternativ ist es denkbar, um die Sendeleistungsdichte noch weiter zu verringern, von den Baken I, als Ausnahme vom Ansprechen über die jeweilige zugeordnete der Baken II, sehr nahe befindliche Hängetaschen bzw. Adressaten direkt mit einer Strecke anzusprechen.

Bevorzugt sind die Baken II innerhalb des Hängetaschenlagers, insbesondere an Verkehrsknotenpunkten, insbesondere nach einem Abstandsmuster, insbesondere nahezu gleichverteilt oder gleichverteilt, innerhalb des Hängetaschenlagers, vorzugsweise über eine Funkstrecke, der jeweiligen Bake I nachgeschaltet. Die Baken II können beispielweise an Übergängen bzw. Kreuzungen zwischen Bereichen, in denen die Hängetaschen gelagert, also wenig bewegt werden, zu Rangierstraßen, in der die Hängetaschen sortiert werden, und/oder Schnellstraßen, auf denen die Hängetaschen vergleichsweise schnell zwischen den Lagerbereichen und einem Eingang/Ausgang bzw. einer Sortiervorrichtung und/oder einer Ringförderanlage fahren, angeordnet sein.

Es ist möglich, die Vielzahl von Baken III der Steuereinrichtung festverdrahtet nachzuschalten. Die Baken III können ebenfalls jeweils an dem Hängetaschenlager, insbesondere an einem Randbereich des Hängetaschenlagers, angebracht sein. Im Unterscheid zu den Baken II können die Baken III an den Eingängen/Ausgängen bzw. der Sortiervorrichtung und/oder der Ringförderanlage und/oder einem Übergabepuffer angebracht sein. Über die Baken III kann die für einen Sortiervorgang und/oder Auslagerungsvorgang erforderliche Kommunikation gebündelt sowie lokal und dadurch besonders ressourcenschonend, also mit einer vergleichsweise geringen Leistungsdichte und hohen Datenrate erfolgen.

Eine weitere bevorzugte Möglichkeit besteht darin, dass der Kommunikationsweg A von der zentralen Steuereinrichtung zu einer adressierten der Hängetaschen bzw. dem Adressaten über eine der Zwischensteuerungen, eine der Baken I, eine der Baken II, oder direkt von einer der Baken I, mittels denen jeweils eine Strecke zu dem Adressaten und/oder der Bake II aufbaubar ist, und/oder eine Vielzahl der Hängetaschen zu dem Adressaten, also insbesondere der adressierten der Hängetaschen, führbar ist, und der Kommunikationsweg B unabhängig davon von der Steuereinrichtung über eine der Baken III zu dem und/oder parallel dazu zu einem anderen Adressaten führbar ist, wobei die Kommunikationswege A und B unterschiedliche Kommunikationsprotokolle und/oder Strecken aufweisen. Es können über zwei Wege Daten übertragen werden, wobei die dazu verwendeten Strecken besonders kurzgehalten werden können, um insgesamt die Sendeleistungsdichte und damit auch einen Stromverbrauch des Hängetaschenlagers zu senken.

Die Zwischensteuerungen können mit einer eigenen Rechenkapazität ausgestattet sein und sind bevorzugt der zentralen Steuereinrichtung hierarchisch untergeordnet. Die Zwischensteuerungen können also selbst Aufgaben übernehmen und die zentrale Steuereinrichtung entlasten.

Die Baken III können ebenfalls der zentralen Steuereinrichtung nachgeschaltet sein und über die Strecke in eine Kommunikation mit dem Adressaten treten, sobald dieser sich in einer Reichweite der Bake III befindet. Bei der Strecke kann es sich um eine bidirektionale Sende-/Empfangsstrecke handeln, wobei Daten auch von dem Adressaten bzw. der entsprechenden Hängetasche zur zentralen Steuereinrichtung übertragen werden können.

Bei einem besonders bevorzugten Ausführungsbeispiel ist das Hängetaschenlager für mindestens 10.000, bevorzugt mindestens 500.000, insbesondere mindestens 750.000, mindestens 1.000.000, mindestens 1.500.000, vorzugsweise zwischen 500.000 und 1.500.000, der Hängetaschen ausgelegt und/oder weist diese auf, wobei die Hängetaschen mittels und durch die Verwendung der zwei Kommunikationswege A und B durch die Steuereinrichtung wahlfrei adressierbar, ansprechbar und/oder steuerbar sind. So kann das gesamte Hängetaschenlager flexibel gesteuert werden.

Bei einem weiteren Ausführungsbeispiel weisen die Baken I, die Baken II sowie die Hängetaschen jeweils eine der für den Kommunikationsweg A eingerichtete erste Sendeempfangsvorrichtung auf, die wahlweise zum Empfangen, Senden oder Weitergeben von Botschaften eingerichtet sind, wobei eine Anzahl der verwendeten Sendeempfangsvorrichtungen zum Übermitteln einer einzelnen Botschaft über den Kommunikationsweg A flexibel ist. Der Kommunikationsweg A kann also an den Standort des Adressaten innerhalb des Hängetaschenlagers angepasst werden, wobei eine Aufteilung in mehrere Einzelstrecken die Sendeleistung im Vergleich zu einer einzigen Strecke, insbesondere Funkstrecke, über die gesamte Distanz verringern kann. Eine Leistung der einzelnen Sendeempfangsvorrichtungen kann vergleichsweise gering und damit ressourcenschonend ausgelegt werden.

Ferner ist es denkbar, dass die Zwischensteuerungen der Steuereinrichtung festverdrahtet nachgeschaltet sind, die Cluster der Baken I der jeweiligen Zwischensteuerung festverdrahtet nachgeschaltet sind, die Cluster der Baken II der jeweiligen Bake I über eine bevorzugt etablierbare der Strecken nachgeschaltet oder nachschaltbar sind und der Adressat über eine der Baken II oder von der Bake II über eine beliebige Anzahl weiterer der Hängetaschen adressierbar und/oder ansprechbar ist. Die Kommunikation erfolgt zwischen der Steuereinrichtung und dem Adressaten bevorzugt teilweise kabelgebunden und teilweise über die Strecke, insbesondere Funkstrecke. Durch die teilweise kabelgebundene Kommunikation kann zusätzlich die Sendeleistung auf ein Minimum reduziert werden, ohne dadurch auf die Vorteile eines individuellen und von dem aktuellen Aufenthalt unabhängigen Ansprechens der Hängetaschen über Funk verzichten zu müssen.

Schließlich kann vorgesehen sein, dass die Baken III sowie die zweiten Sendeempfangsvorrichtungen der Hängetaschen den Standard Bluetooth Low Energy (BLE) aufweisen und der Kommunikationsweg B entsprechend dieses Standards etablierbar ist. Dies kann direkt zwischen der jeweiligen Bake III und dem Adressaten erfolgen. Es kann eine auf Bereiche des Hängetaschenlagers begrenzte, schnelle und vorzugsweise bidirektionale Kommunikation erfolgen, insbesondere für besondere Aufgaben wie Sortieren oder Ein- sowie Auslagern. Andere Aufgaben, wie das Steuern einer einfachen Verlagerung, insbesondere über weitere Strecken, zwischen zwei Orten innerhalb des Hängetaschenlagers, kann über den Kommunikationsweg A erfolgen, der durch seine hohe Flexibilität und Reichweite jeden Adressaten an einem beliebigen Ort innerhalb des Hängetaschenlagers ansprechen kann. Der Kommunikationsweg A kann bevorzugt für ein Aufwecken und Umlagern einer der Hängetaschen nach einer längeren inaktiven Phase, beispielweise für eine Lagerung eines Lagerguts oder Aufbewahrung der leeren Hängetasche, verwendet werden.

Es ist auch denkbar, dass zusätzlich zu den mitfahrenden Sende-Empfangsvorrichtungen in dem Hängetaschenlager unbewegliche Baken II vorgesehen sind. Die Baken II können vorzugsweise identisch aufgebaute bzw. ein identisches oder zumindest ähnliches Protokoll aufweisende Sende-Empfangsvorrichtungen wie die mitfahrenden Sende-Empfangsvorrichtungen aufweisen. Über die Baken II kann bevorzugt die Kommunikation zwischen den jeweiligen Baken I und der jeweiligen Bake II erfolgen. Das hat den Vorteil, dass der Kommunikationsweg A des ersten Kanals wahlweise über eine ortsfeste Funkstrecke zwischen den Baken I und den Baken II oder direkt von einer der Baken I zu einer der mitfahrenden Sende-Empfangsvorrichtungen aufbaubar ist. Es ist also nicht zwingend erforderlich den Kommunikationsweg A über eine der Baken II zu etablieren. Ggf. kann auch direkt von einer der Baken I eine der mitfahrenden Sende-Empfangsvorrichtungen eine der Hängetaschen angefunkt werden.

Für eine Wahl des zu etablierenden Kommunikationswegs A kann eine künstliche Intelligenz verwendet werden. Ebenso ist es denkbar, dafür vorhandene Systeme und Protokolle zu verwenden, die als industrielles Internet der Sachen (IIoT) bekannt sind, zu verwenden. Die Zwischensteuerung kann ebenfalls über ein solches Protokoll verfügen bzw. an dieses angepasst und dazu ausgelegt sein, um die Baken I entsprechend anzusprechen.

Über diesen Kommunikationsweg A können flexibel alle Hängetaschen des Hängetaschenlager angesprochen werden, vorzugsweise bidirektional. Also, um den Hängetaschen eine Nachricht von der Zentralsteuerung ausgehend zukommen zu lassen, beispielweise die Weganweisung, oder um in entgegengesetzter Richtung eine Nachricht abzusetzen, beispielweise einen Stau und/oder eine Panne zu melden.

Besonders vorteilhaft können ein Funkverkehr und/oder eine Sendeleistung innerhalb des Hängetaschenlagers dadurch verringert werden, dass an bestimmten Punkten, insbesondere an Rändern des Hängetaschenlagers, vorzugsweise im Bereich von Auslagerungsvorrichtungen, beispielweise in vertikaler Richtung fördernden Förderanlagen, insbesondere Ringförderanlagen ein weiterer Kanal bzw. Kommunikationsweg B vorgesehen ist. Ein dort für die Auslagerung anfallender Kommunikationsbedarf kann insbesondere über eine zweite Funktechnik und/oder über vergleichsweise kurze Strecken erfolgen, beispielweise über wenige Zentimeter bis circa 10 Meter. Eine solche Technik ist beispielweise unter der Bezeichnung Bluetooth Low Energy, Bluetooth LE (kurz BLE) bekannt. Sie verläuft von einer Bake III jeweils bidirektional zu einer der Hängetaschen. Vorzugsweise können unterschiedliche Botschaften im Vergleich zum ersten Kommunikationsverfahren mit den Hängetaschen ausgetauscht werden. Zur Vereinfachung ist es jedoch auch denkbar, dass zumindest die an die Hängetaschen gesendeten Botschaften wie die Wegbeschreibungen identisch sind. Dadurch können eine Komplexität der Kommunikation sowie ein Aufwand für die Steuerung der Hängetaschen selbst weiter reduziert werden.

Sobald eine der Hängetaschen einen Empfangsbereich einer der Baken III, insbesondere eine der Förderanlagen erreicht, kann ein Handshake erfolgen und die Bake III übernimmt die Kommunikation. Die Baken III sind vorzugsweise derselben Zentralsteuerung untergeordnet und können ggf. eine weitere eigene Steuerung/Rechenkapazität und ein entsprechendes weiteres Protokoll aufweisen.

Die Kommunikation kann bevorzugt im Bereich des gesamten Hängetaschenlagers über den Kommunikationsweg A laufen, der ein kooperatives und hochflexibles Netzwerk aufweisen kann bzw. jeweils über dieses aufbaubar ist. Dieses hochflexible Netzwerk kann sowohl ortsfeste als auch sich bewegende Teilnehmer aufweisen, was auch unter der Bezeichnung Meshnet bekannt ist. Dabei können die Teilnehmer jeweils als Sender, Empfänger und als Mittler zur Weitergabe einer Botschaft ausgelegt und/oder eingerichtet sein. Ein mehrfaches Ansprechen umliegender Funknetzteilnehmer ist also ggf. auch möglich. Dieses Meshnet wiederum kann jedoch in sich hierarchisch über die nicht beweglichen und der Zentralsteuerung unterstehenden Zwischensteuerung, die untergeordneten und fix montierten Baken I sowie die ebenfalls fix montierten Baken II gegliedert sein. Als Besonderheit sind die Baken II bevorzugt vom Protokoll zwar gleichwertig, jedoch ortsfest, sodass diesen eine herausragende Stellung beim flexiblen Aufbau der Verbindungswege, also des jeweiligen Kommunikationswegs A, zukommen kann, was eine Funk-Last verringert, ohne eine Komplexität des Systems zu erhöhen. Das Netzwerk kann dazu selbstlernend ausgelegt sein und automatisch sich nicht bewegende Teilnehmer erkennen und bevorzugt zum Verbindungsaufbau nutzen. Die Hierarchie des Kommunikationswegs A kann also vorzugsweise durch einen Selbstlernvorgang bzw. Adaption erzeugt werden.

Eine Kommunikationsdichte innerhalb des Hängetaschenlagers kann automatisch dynamisch angepasst werden, beispielweise sind in reinen Lagerbereichen eine Kommunikationsdichte sowie ein Verkehrsaufkommen üblicherweise vergleichsweise gering, da dort die Lagergüter über mehrere Stunden bis Tage unbeweglich gelagert werden.

Durch den Kommunikationsweg B kann eine zusätzliche Entlastung erfolgen, indem dieser in Bereichen mit einem hohen Kommunikationsaufwand, z.B. bei Förderanlagen und Sortiervorrichtungen innerhalb der Hängetaschenlagers zum Einsatz kommt. Dazu kann der Kommunikationsweg B eine(n) vom Kommunikationsweg A abweichende(n) Funkkanal bzw. Funkfrequenz und/oder Funkstandard aufweisen.

Im Bereich einer Förder- und/oder Sortieranlage, herrscht auf vergleichsweise engem Raum ein im Vergleich dazu erhöhter Kommunikationsbedarf sowie Verkehr, der über das zweite bidirektionale Protokoll (BLE) des zweiten Kommunikationswegs B gut beherrscht werden kann, womit das hochflexible Meshnet des ersten Kommunikationsweges A vorteilhaft entlastet werden kann. Außerdem kann eine Gesamtfunkleistung des Hängetaschenlagers reduziert werden. Außerdem können dadurch zeitkritische Vorgänge besser beherrscht werden.

Bei einer Ausführung des Hängetaschenlagers kann vorgesehen sein, dass eine Dichte der Hängetaschen und/oder der Rolladapter auf dem Netz in einer X-Richtung und/oder Fahrtrichtung gesehen und bei einer Kolonnenfahrt oder einer Lagerung im Stillstand, bis zu 20 der Hängetaschen, insbesondere zwischen 10 und 20 der Hängetasche pro Meter beträgt, und/oder das Netz eine Vielzahl an in einer Y-Richtung und/oder Z-Richtung gesehen eine Vielzahl an parallel angeordneten Fahrwegen mit dieser Dichte aufweist, wobei die Hängetaschen und/oder die Rolladapter und/oder der Adressat mittels und durch die Verwendung der zwei Kommunikationswege A und B durch die Steuereinrichtung jeweils wahlfrei adressierbar, ansprechbar und/oder steuerbar sind. Es können vergleichsweise viele der Lagergüter auf engem Raum gelagert, sortiert und bewegt werden, wobei eine Funkleistungsdichte trotz der hohen Dichte an Hängetaschen so gering haltbar ist, dass ein zuverlässiges Adressieren möglich bleibt.

Außerdem ist es bei einer Alternative möglich, dass der Kommunikationsweg A über eine erste größere Distanz oder die erste größere Distanz, die im Bereich des gesamten Hängetaschenlagers verläuft, aufbaubar ist und der Kommunikationsweg B über eine zweite kleinere Distanz oder die zweite kleinere Distanz, die in Bereichen des Hängetaschenlagers mit einem hohen Kommunikationsaufwand verläuft, und/oder bei Förderanlagen und Sortiervorrichtungen mit dem hohen Kommunikationsaufwand innerhalb des Hängetaschenlagers, aufbaubar ist. So kann eine an die beim autonomen Fahren, Lagern, Sortieren und Auslagern auftretenden Kommunikationsaufgaben angepasste Kommunikation erfolgen. Dadurch kann die Funkleistungsdichte gering gehalten werden.

Ferner ist es denkbar, dass der Kommunikationsweg A ein hochflexibles und/oder selbstlernendes Meshnet aufweist, und/oder dass eine Hierarchie des Kommunikationswegs A durch einen Selbstlernvorgang adaptierbar und/oder erzeugbar ist. Dadurch kann zusätzlich ein Programmier- und Steuerungsaufwand für ein Routing entfallen.

Schließlich ist es alternativ oder zusätzlich möglich, dass die Kommunikationswege A und B unterschiedliche Zeitverhalten aufweisen, und/oder der Kommunikationsweg A ein an das Lagern in Ruhe und Adressieren angepasstes, vergleichsweise langsameres Zeitverhalten als der Kommunikationsweg B aufweist, und/oder dass der Kommunikationsweg B ein an das Sortieren oder Sortieren und Steuern bei Förderanlagen und Sortiervorrichtungen mit einem hohen Kommunikationsaufwand innerhalb des Hängetaschenlagers angepasstes, schnelleres Zeitverhalten als der Kommunikationsweg A aufweist. Die Kommunikationsaufgaben innerhalb des Hängetaschenlagers können flexibel an Bereiche mit hohem Kommunikationsbedarf und gleichzeitig hohen Anforderungen an das Zeitverhalten angepasst werden.

Die Aufgabe wird außerdem mit einem Verfahren gemäß Anspruch 12 gelöst.

Das Verfahren zum Betreiben eines mit zumindest teilautonom oder autonom fahrbaren Hängetaschen ausgestatteten Hängetaschenlagers umfasst ein zumindest teilautonomes Fahren der Hängetaschen und ein kabelloses, insbesondere teils kabelloses und teils kabelgebundenes, Übergeben von Botschaften an die Hängetaschen zum Steuern des zumindest teilautonomen Fahrens über einen Kommunikationsweg A und einen davon unabhängigen Kommunikationsweg B. Die Kommunikation kann parallelisiert, wahlweise und flexibel und/oder aufgabenspezifisch auf zwei Kanälen und mit einer vergleichsweise hohen Datenrate bei einer vergleichsweise geringen Sendeleistungsdichte erfolgen. Das Verfahren wird vorzugsweise mit einem vorab beschriebenen Hängetaschenlager durchgeführt. Insofern ergeben sich die vorab beschriebenen Vorteile.

Bei einer bevorzugten Ausführungsform des Verfahrens erfolgen ein Durchführen eines Handshakes, sobald sich eine jeweilige der Hängetaschen innerhalb einer Reichweite einer der Baken III befindet, und ein Übernehmen der Steuerung der jeweiligen der Hängetaschen über den Kommunikationsweg B zum Durchführen eines Sortiervorgangs, Auslagervorgangs und/oder Einlagerungsvorgangs des Hängetaschenlagers. Der Kommunikationsweg A kann über das gesamten Hängetaschenlager erfolgen, wobei die Kommunikation für den/die Vorgänge mit dem Kommunikationsweg B durchgeführt werden kann. Dieser kann dazu bei einer Annäherung übernehmen, wobei dieser für vergleichsweise kurze Distanzen ausgelegt sein kann, insbesondere nach einem bekannten Industriestandard wie BLE. Es kann eine Übergabe erfolgen, sobald sich die jeweilige Hängetasche einer der Baken III annähert.

Alternativ oder zusätzlich ist es möglich, die jeweiligen mitfahrenden und für den Kommunikationsweg B eingerichteten zweiten Sendeempfangsvorrichtungen der Hängetaschen für eine Fahrdynamikregelung, Abstandsregelung und/oder Kollisionsvermeidung zu verwenden. Dazu können sich in einer Nachbarschaft innerhalb des Hängetaschenlagers oder auf einem gemeinsamen Fahrweg befindliche Hängetaschen zusätzlich über den Kommunikationsweg A und/oder ein Protokoll des Kommunikationswegs B miteinander in Verbindung treten, vorzugsweise daraus einen Abstand zueinander ableiten, insbesondere um darauf basierend Entscheidungen zu treffen, welche Maßnahmen wie Anpassen einer Fahrgeschwindigkeit aneinander und/oder Anhalten zur Kollisionsvermeidung und/oder eine Kolonnenfahrt erforderlich sind. Es kann also auf den kurzen Distanzen eine zweite Aufgabe erfüllt werden.

Erfindungsgemäß sind die Kommunikationswege A und B für unterschiedliche Distanzen ausgelegt. Je nach erforderlicher Distanz kann einer der Kommunikationswege A oder B verwendet werden. So kann die Funkleistungsdichte weiter reduziert werden. Ein zusätzlicher Aufwand kann entfallen und/oder eine Überlastung einer der Kommunikationswege A oder B vermieden werden. Ferner ist es denkbar, dass sich ein Zeitverhalten der Kommunikationswege A und B voneinander unterscheiden, wobei der Kommunikationsweg B, beispielweise zum Erledigen der Aufgaben, insbesondere der Längssteuerung, ein an die Aufgaben angepasstes Zeitverhalten bzw. besseres Zeitverhalten als der Kommunikationsweg A aufweisen kann.

Über den ersten Kanal bzw. Kommunikationsweg A können Nachrichten, beispielweise mit einer Botschaft wie einer Weganweisung, von der zentralen Steuervorrichtung an einzelne Hängetaschen gesendet werden. Diese steuern dann eine Wegstrecke auf einem Netz zumindest teilautonom, um einen in der Weganweisung enthaltenen Zielort zu erreichen. Dies kann von der zentralen Steuervorrichtung über eine Vielzahl an untergeordneten Zwischensteuerungen, von diesen jeweils über eine Vielzahl an Baken I, und von diesen über Sende-Empfangseinrichtungen, die sich netzartig miteinander verbinden und als Mittler bis hin zu einer bestimmten zu adressieren der Hängetaschen fungieren, erfolgen. Die Zwischensteuerungen können eine eigene Rechenkapazität aufweisen.

Die Kommunikation zwischen der zentralen Steuervorrichtung, Zwischensteuerung und der Baken I kann kabelgebunden und die weitere Kommunikation über die Sende-Empfangsvorrichtungen mittels einer Vielzahl an über kurze Distanzen von wenigen Metern, insbesondere maximal 100 Meter, vorzugsweise maximal 20 Meter, aufbaubare Funkstrecken erfolgen. Dadurch können eine Sendeleistung niedrig und der dann jeweils tatsächlich realisierte Kommunikationsweg A des ersten Kanals flexibel gehalten und/oder aufgebaut werden.

Bevorzugt können die Sende-Empfangsvorrichtungen des Kommunikationswegs A und/oder B mit den Hängetaschen mitfahren, also die Hängetaschen und/oder die Rolladapter die Sende-Empfangsvorrichtungen aufweisen.

Über die Kommunikationswege A und B können dieselben Botschaften gesendet werden und bevorzugt zusätzlich über den Kommunikationsweg B die Abstandsinformationen zu den anderen Hängetaschen gewonnen werden.

Unter einer Bake kann in dieser Anmeldung ein unbewegliches Signalfeuer, das sich an fahrende Teilnehmer wendet, verstanden werden, insbesondere eine Sendeempfangsvorrichtung, die mit den fahrenden Hängetaschen eine Kommunikation aufbauen kann, insbesondere eine bidirektionale Kommunikation und/oder Meshnet, vorzugsweise nach einen Standard BLE und/oder IIoT. Es kann darunter auch eine ortsfeste Sendeempfangsvorrichtung verstanden werden, die Nachrichten weiterleitet und ggf. im Sinne einer Relaisstation bzw. Repeaters verstärkt, also mit einer vergleichsweise geringen Gesamtsendeleistung eine größere Reichweite ermöglicht.

Es ist denkbar, über den Kommunikationsweg A wahlweise an mehrere der Hängetaschen gleichzeitig eine Nachricht oder nur an eine der Hängetaschen zu senden. Die Hängetaschen, die zusammen eine der Nachrichten empfangen sollen, können dazu eine gemeinsame Kennung aufweisen, an die die gemeinsame Nachricht gerichtet werden kann. Ähnlich dem Rundfunkprinzip können dadurch individuelle Nachrichten und damit Funkverkehr eingespart werden.

Weitere Vorteile ergeben sich aus den Unteransprüchen und der nachfolgenden Beschreibung eines bevorzugten Ausführungsbeispiels.

Im Folgenden wird die Erfindung anhand eines in den Figuren dargestellten Ausführungsbeispiels näher erläutert. Es zeigen:
- Fig. 1: eine schematische dreidimensionale Ansicht von schräg seitlich vorne oben eines Hängetaschenlagers;
- Fig. 2: eine schematische Seitenansicht einer Hängetasche für das in Fig. 1 gezeigte Hängetaschenlager;
- Fig. 3: eine schematische dreidimensionale Ansicht von schräg seitlich oben auf mehrere der in Fig. 2 gezeigten Hängetaschen an einem Schienennetz;
- Fig. 4: eine Ansicht eines Teils einer Ebene des in den vorhergehenden Figuren gezeigten Hängetaschenlagers, mit einer ersten und einer zweiten Kommunikationsanordnung zur Realisierung von zwei Kommunikationswegen A und B;
- Fig. 5: eine Teilansicht der in Fig. 4 dargestellten Ebene;
- Fig. 6: ein Baumdiagramm einer hierarchischen Gliederung der Kommunikationsanordnungen des in den vorhergehenden Figuren gezeigten Hängetaschenlagers;
- Fig. 7: eine Teilansicht des in Fig. 6 gezeigten Baumdiagramms mit dem Kommunikationsweg B;
- Fig. 8: ein Ablaufdiagramm eines Verfahrens zum Betreiben eines mit zumindest teilautonom oder autonom fahrbaren Hängetaschen ausgestatteten Hängetaschenlagers.

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Einrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und, werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

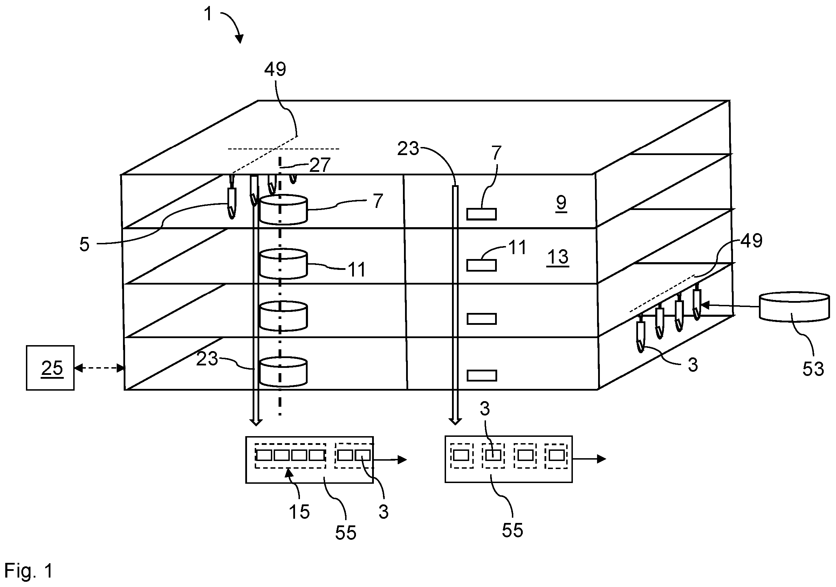

Fig. 1 zeigt eine schematische dreidimensionale Ansicht von schräg seitlich vorne oben eines Hängetaschenlagers 1.

Das Hängetaschenlager 1 weist zumindest zwei Ebenen 9, 13 auf, hier insgesamt vier, wobei beispielhaft eine erste Ebene 9 und eine zweite Ebene 13 mit Bezugszeichen versehen sind. Es sind mehr oder weniger Ebenen denkbar, beispielweise 10 Ebenen oder mehr, die vertikal übereinander angeordnet sind.

Jede der Ebenen 9, 13 des Hängetaschenlagers 1 weisen jeweils einen Übergabepuffer 7, 11 auf, von denen ebenfalls nur ein erster Übergabepuffer 7 und ein zweiter Übergabepuffer 11 mit Bezugszeichen versehen sind.

Das Hängetaschenlager 1 dient zum Aufnehmen, Lagern, Sortieren und/oder Auslagern von Lagergütern 3, wahlweise als reine(s) Lager oder Sortiervorrichtung. Die Übergabepuffer 7,11 sind vorzugsweise vertikal übereinander angeordnet, was mittels einer Linie 27 symbolisiert ist. Es ist jedoch auch denkbar, nur zumindest zwei der Übergabepuffer 7,11 übereinander anzuordnen und/oder diese schräg zu einer senkrechten Raumrichtung entlang der Linie 27 anzuordnen.

Entlang der gedachten Linie 27 entlang der die Übergabepuffer 7,11 angeordnet sind, verläuft auch eine Ringförderanlage 23, vorzugsweise eine Vielzahl solcher. Die Übergabepuffer 7,11 sind so benachbart zu der Ringförderanlage 23 angeordnet, dass die Lagergüter 3 von diesen in die Ringförderanlage 23 übergeben werden können und/oder von dieser in die Ebenen 9,13 bzw. die Übergabepuffer 7, 11 der Ebenen 9, 13 eingelagert werden können.

In einen Ausführungsbeispiel werden die Lagergüter 3 direkt in die Ringförderanlage 23 übergeben. Bevorzugt werden die Lagergüter 3 befindlich in einer Hängetasche 5 in die Ringförderanlage 23 übergeben. Besonders bevorzugt erfolgt ein autonomes Antreiben, Steuern und/oder Bewegen der gesamten Hängetasche 5 vor dem Bereitstellen, beim Bereitstellen und/oder Übergeben der Hängetasche 5. Das Verfahren erfolgt insbesondere schleppkettenlos. Das Hängetaschenlager 1 ist dazu beispielweise zumindest bereichsweise oder gänzlich schleppkettenlos aufgebaut, vorzugsweise zumindest innerhalb der Ebenen 9, 13.

Dazu weist das Hängetaschenlager 1 ein Netz 49, beispielweise ein Schienennetz mit Verbindungsabschnitten und Verzweigungen wie Kreuzungen und/oder Weichen auf. Bevorzugt handelt es sich um ein Gitter mit geradlinigen und durch die Kreuzungen und/oder Weichen aneinander angeschlossenen Schienen, beispielweise mit rechteckförmigen Netzmaschen.

Um die Lagergüter 3 in das Hängetaschenlager einzulagern ist, weist dieses eine Übergabestelle 53 auf, über die die einzelnen Lagergüter in einzelne Hängetaschen 5 übergeben werden. Bevorzugt wird pro Hängetasche 5 nur jeweils eines der Lagergüter 3 übergeben. Mehrere sind jedoch auch denkbar, sofern diese in der entsprechenden Hängetasche 5 Platz finden. In der Übergabestelle können die Lagergüter 3 optional gepuffert werden und direkt in die Hängetaschen übergeben werden, die dazu die Übergabestelle 53 ansteuern und dann vorzugsweise autonom an einen Lagerplatz des Hängetaschenlagers 1 weiterfahren.

An einer Entladestation 55 des Hängetaschenlagers 1 werden die Lagergüter 3 aus der Ringförderanlage 23 wieder entnommen und stehen dort vorzugsweise in einer vorgegebenen oder vorgebbaren Reihenfolge 15 zur Verfügung. Es ist denkbar, dass dazu eine Kolonne von Hängetaschen 5 in der gewünschten Reihenfolge 15 aus der Ringförderanlage 23 in die Entladestation 55 einfahren bzw. von der Ringförderanlage 23 in diese übergeben, dort entladen werden und dann wieder für eine weitere Beladung zurückfahren. Die Entladestation 55 kann innerhalb oder außerhalb einer der Ebenen 9, 13, bevorzugt in einer untersten Ebene, angeordnet sein.

Alternativ ist es jedoch auch denkbar, dass die Hängetaschen 5 mittels der Ringförderanlage 23 gefördert und an der Entladestation 55 in der gewünschten Reihenfolge entladen und mittels der Ringförderanlage 23 sofort leer wieder in das Hängetaschenlager 1 zurücktransportiert werden, also ohne, dass die jeweiligen Hängetaschen 5 in der Entladestation verbleiben oder dort zur Verfügung stehen, beispielweise um nach dem Entladen an die Übergabestelle 53 weiterzufahren oder weitertransportiert zu werden.

Besonders bevorzugt sind die Hängetaschen 5 so ausgelegt, dass diese autonom das Netz 49 befahren. Hängetaschenlager 1 mit autonom fahrenden Hängetaschen 5 sind bekannt und beispielweise in der DE10 2018 128 417 A1 beschrieben, sodass hier auf eine detailliertere Beschreibung verzichtet wird. Vorzugsweise ist für eine Überwachung und Steuerung des Hängetaschenlagers 1, insbesondere zur Vorgabe der gewünschten Reihenfolge 15 und Steuerung der Ringförderanlage 23 eine Steuereinrichtung 25 vorgesehen, die mit den Funktionseinheiten des Hängetaschenlagers 1 Informationen austauscht.

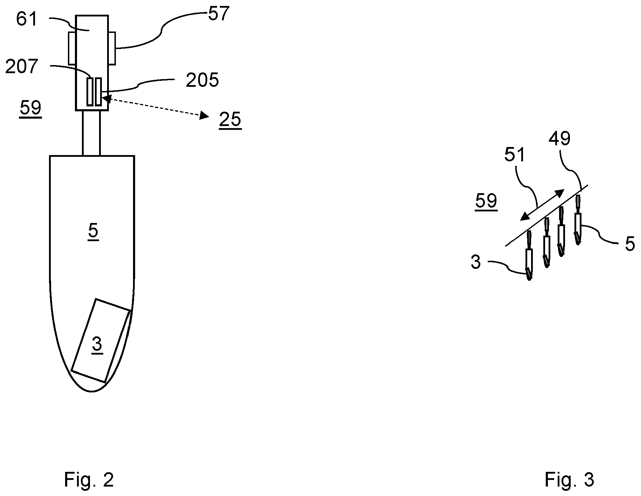

Fig. 2 zeigt eine schematische Seitenansicht einer solchen Hängetasche 5 für das in Fig. 1 gezeigte Hängetaschenlager 1 und Fig. 3 eine dreidimensionale Ansicht mehrerer der in Fig. 2 gezeigten Hängetaschen 5 eingehängt in das beispielweise als Schienennetz ausgelegte Netz 49. Dazu weisen diese Räder 57 auf und sind mittels einer durch das Bezugszeichen 59 lediglich angedeuteten Antriebsenergie und einen diese nutzenden Antrieb antreibbar. Die Hängetaschen 5 können zweiteilig ausgeführt sein und einen Rolladapter 61 und ein daran, insbesondere zerstörungsfrei wieder lösbar, aufgehängtes bzw. aufhängbares Taschenmaterial aufweisen, insbesondere beigeschlaffes und/oder faltbares Material, in dem ein Lagergut 3 aufnehmbar ist. In Fig. 3 ist mittels eines Doppelpfeils 51 eine mögliche Bewegungsrichtung der Hängetaschen 5 im Netz 49 angedeutet. Die Hängetaschen 5, insbesondere deren Rolladapter 61, sind zum autonomen oder teilautonomen Fahren auf dem Netz 49 eingerichtet, programmiert und/oder ausgelegt. Dazu können diese, insbesondere die Rolladapter 61, den eigenen Antrieb und eine eigene Längs- und Querdynamiksteuerung aufweisen.

In Fig. 2 ist die Hängetasche 5 mit in dieser aufgenommenem Lagergut 3 dargestellt. Das Lagergut 3 befindet sich innerhalb eines U-förmig herabhängenden Materials, insbesondere biegeschlaffen Materials. Eine Be- und Entladung kann insbesondere von oben oder seitlich erfolgen.

Die Hängetasche 5 weist neben einem nicht näher dargestellten Antrieb sowie einer entsprechenden Steuerung eine erste Sendeempfangsvorrichtung 205 und eine zweite Sendeempfangsvorrichtung 207 auf. Diese können wahlweise einzeln oder als integriertes Bauteil ausgeführt sein, vorzugsweise zumindest unterschiedliche Funkfrequenzen und/oder Übertragungsprotokolle aufweisen.

Über diese kann die Hängetasche 5 über zwei Kommunikationswege mit anderen Hängetaschen 5 und/oder der Steuereinrichtung 25 Botschaften empfangen oder aussenden. Die Botschaften können also kabellos an diese übergeben oder von diesen ausgesendet werden. Dies kann wahlweise über eine der Sendeempfangsvorrichtung 205 oder 207 erfolgen, beispielweise abhängig von einem Standort innerhalb des Hängetaschenlagers 1 und/oder einer aktuellen Aufgabe der jeweiligen Hängetasche 5 wie Lagern, Transportieren, Auslagern, Einlagern, Puffern und/oder Sortieren des Lagerguts 3.

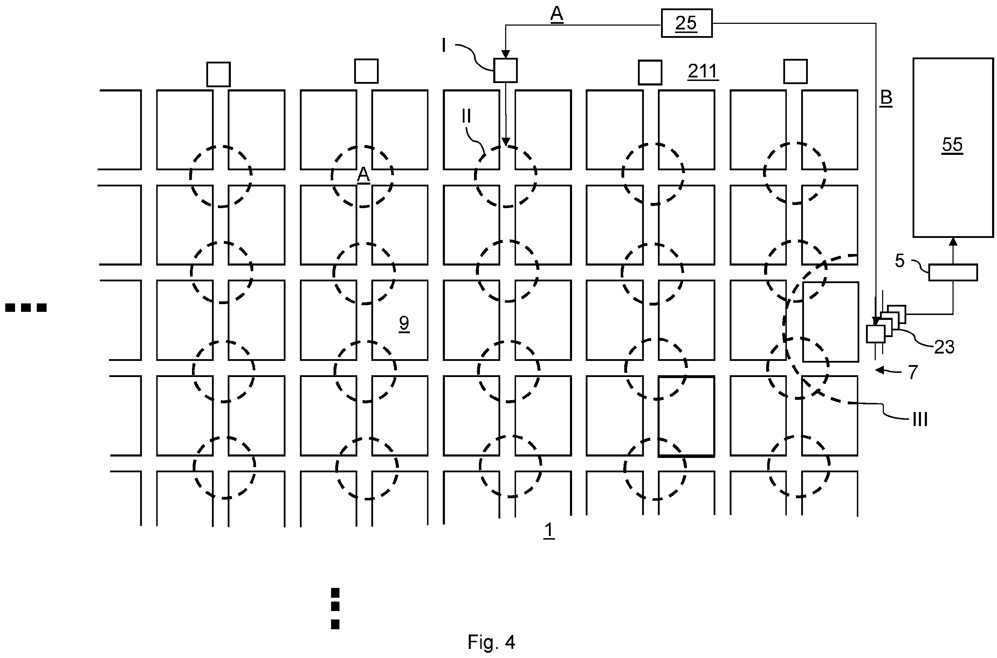

In den Fig. 4 bis 7 sind die möglichen Kommunikationswege näher beschrieben.

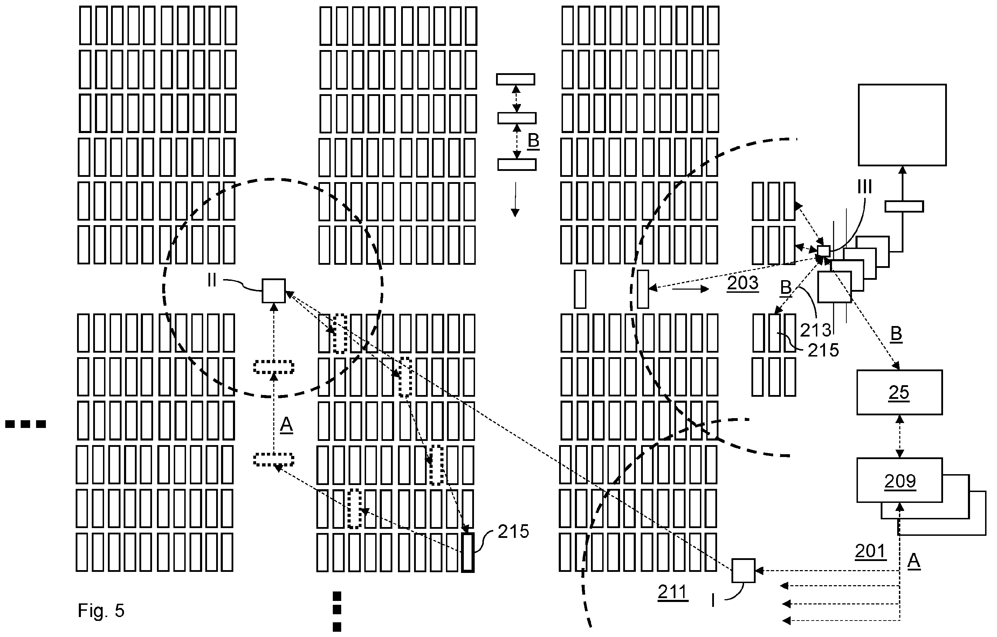

Die Fig. 4 und 5 zeigen eine Ansicht eines Teils der Ebene 9 des in den vorhergehenden Figuren gezeigten Hängetaschenlagers 1 mit zwei Kommunikationswegen A und B. Die übrigen Ebenen des Hängetaschenlagers 1 können analog aufgebaut sein, also ebenfalls Kommunikationswege A und B aufweisen.

Der Kommunikationsweg A verläuft durch eine erste Kommunikationsanordnung 201 von der zentralen Steuereinrichtung 25, über eine Vielzahl von Zwischensteuerungen 209, eine Vielzahl von Baken I sowie eine Vielzahl von Baken II und/oder einzelne der im Hängetaschenlager 1 befindlichen Hängetaschen 5 zu einem Adressaten 215. Bei dem Adressaten 215 handelt es sich in diesem Ausführungsbeispiel ebenfalls um eine adressierte der Hängetaschen 5, für die die Botschaft 217 gedacht ist, oder von der diese ausgesendet wird. In der adressierten der Hängetaschen 5 bzw. dem Adressaten 215 kann eines der Lagergüter 3 aufgenommen sein. So kann beispielweise über den Kommunikationsweg A eine Anweisung gesendet werden, wie mit dem Lagergut verfahren werden soll, insbesondere, wo dieses erwartet bzw. hin transportiert werden soll. Diese Aufgaben kann dann die Hängetasche 5 selbst übernehmen.

Durch die Beteiligung der Hängetaschen 5 selbst als Mittler kann ein Meshnet gebildet und jede einzelne der Hängetaschen 5 wahlfrei angesprochen werden. Besonders bevorzugt befindet sich in jeder der Hängetaschen 5 nur ein einzelnes Lagergut 3, sodass diese einzeln abrufbar sind. Dadurch ist ein maximal flexibles und schnelles Handling und/oder Sortieren möglich. Vorzugsweise sind die Baken II an Weichen und die Baken I an Randbereichen 211 der Ebene 9 fix angeordnet. So kann eine Wegbildung für den Kommunikationsweg A vereinfacht werden.

Der Kommunikationsweg B verläuft durch eine zweite Kommunikationsanordnung 203 von der zentralen Steuereinrichtung 25 über eine Bake III, mittels vergleichsweise kurzen, insbesondere wenige Meter, insbesondere weniger als 10 Meter, vorzugsweise bidirektionalen Funkstrecken, beispielweise nach dem Standard BLE, zu dem Adressaten 215.

Vorzugsweise weisen die Ringförderanlagen 23 des Hängetaschenlagers 1 pro Ebene 9, 13 jeweils eine der Baken III auf. Dadurch können eine Auslagerung, Sortierung und/oder Pufferung sowie eine Übergabe aus der Ebene 9 in die Ringförderanlage 23, also vorzugsweise gleichzeitig eine Sortierung der Hängetaschen 5 und/oder der darin aufgenommenen der Lagergüter 3, erfolgen. Es ist möglich, alle sich in einer Reichweite der jeweiligen Bake III befindlichen Hängetaschen 5 nach einem Handshake über jeweils eine Strecke 213, vorzugsweise Funkstrecke, mit zeitlichem Multiplexing quasi gleichzeitig anzusprechen und damit zu koordinieren. Entsprechende Botschaften von und zu dem jeweiligen Adressaten 215 können ebenfalls Anweisungen für eine Verlagerung zu einem neuen Ort innerhalb des Hängetaschenlagers 1 enthalten. Vorzugsweise werden über die Kommunikationswege A und B identisch aufgebaute Botschaften 217 zur Koordination der Hängetaschen 5 übertragen, sodass die Steuerungen der Hängetaschen 5 lediglich unterschiedliche Übertragungsprotokolle der Kommunikationswege A und B verarbeiten, jedoch nur für eine Art von Botschaften ausgelegt sein können.

Es ist denkbar, den Kommunikationsweg B auch bilateral zwischen zumindest zwei der Hängetaschen 5, also ohne eine Beteiligung der zentralen Steuereinrichtung 25 zu verwenden. Dadurch kann zusätzlich die Sendeleistungsdichte im Hängetaschenlager 1 verringert werden, da diese Aufgabe dadurch nicht über die zentrale Steuereinrichtung 25 läuft.

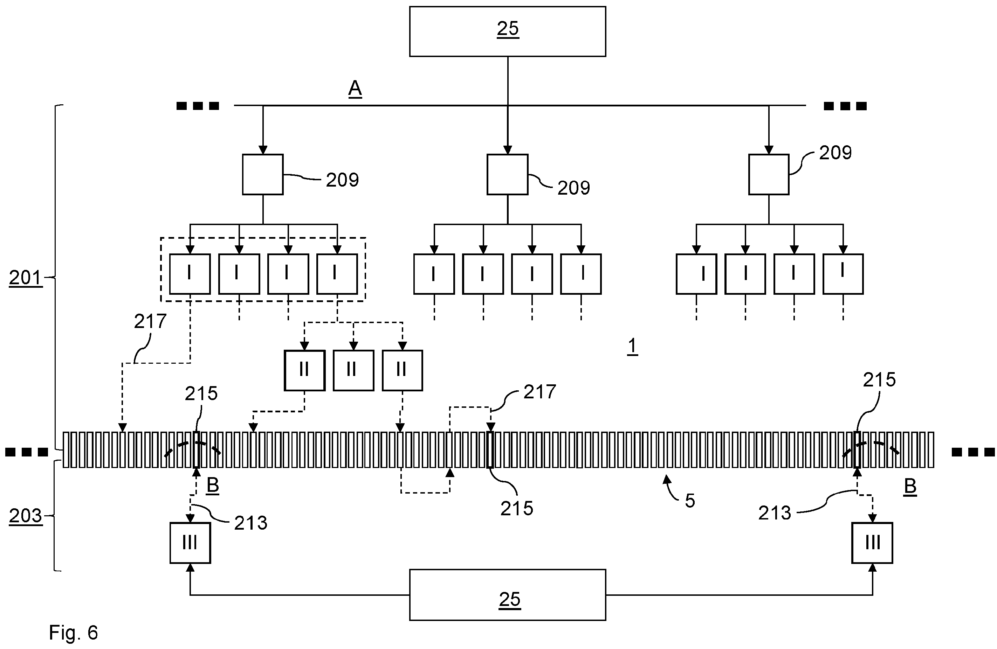

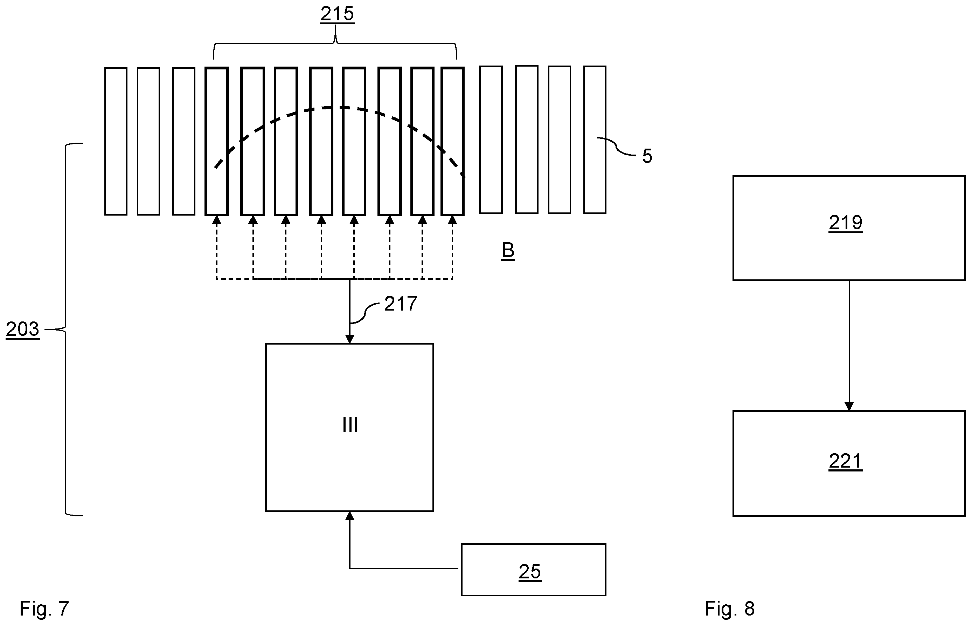

Fig. 6 zeigt ein Baumdiagramm einer hierarchischen Struktur der ersten und zweiten Kommunikationsanordnung 201 und 203 zur Verdeutlichung der damit möglichen Kommunikationswege A und B. Fig. 7 zeigt eine Teilansicht des in Fig. 6 gezeigten Baumdiagramms mit dem Kommunikationsweg B.

In den Fig. 6 und 7 sind vorzugsweise festverdrahtete Strecken 213 mittels durchgezogener Linien und Pfeilen und funkbasierte Strecken 213 mittels gestrichelter Linien und Pfeilen symbolisiert.

Die erste Kommunikationsanordnung ist in fünf Lagen gegliedert.

Auf einer obersten ersten Lage befindet sich die zentrale Steuerung 25, der eine Vielzahl der Zwischensteuerungen 209 nachgeschaltet ist.

Diese sind in einer zweiten Lage vorzugsweise kabelgebunden miteinander verbunden, beispielweise zwischen zwei und 100 Stück, vorzugsweise circa 5 Stück pro Ebene des Hängetaschenlagers 1. Vorzugsweise sind die Zwischensteuerungen 209 mit einer eigenen Recheneinheit bzw. Rechenkapazität ausgestattet. Diese kann als Standardteil ausgeführt sein. Es können also Aufgaben zur Wegbildung, Neuwegbildung, falls ein gebildeter Kommunikationsweg A abbricht, und/oder Steuerung der Kommunikation in die Zwischensteuerungen 209 ausgelagert werden, um die zentrale Steuereinrichtung 25 zu entlasten.

In einer der zweiten Lage untergeordneten dritten Lage ist eine Vielzahl der Baken I angeordnet. Dabei sind vorzugsweise vier der Baken I jeweils einer der Zwischensteuerungen 209 nachgeschaltet. Dabei ist es möglich, dass die vier zusammengefassten Baken I in einem gemeinsamen Gehäuse untergebracht sind, was in Fig. 6 mittels eines gestrichelten Vierecks angedeutet ist. Ferner ist es denkbar, in dem Gehäuse auch die jeweilige Zwischensteuerung 209 mitunterzubringen. Pro Zwischensteuerung 209 können also vier der Baken I angesprochen werden.

Mittels der dritten Lage können pro Bake I eine Vielzahl an untergeordneten Baken II angesprochen werden, die dazu in einer vierten Lage angeordnet sind. Die Kommunikation von der ersten Lage bis zur dritten Lage erfolgt vorzugsweise kabelgebunden, wobei vorzugsweise die Komponenten der ersten, zweiten und dritten Lage ortsfest an dem Hängetaschenlager 1 montiert sind, vorzugsweise an dem Randbereich 211.

Als weitere Besonderheit sind die Baken II der vierten Lage vorzugsweise ebenfalls ortsfest in oder an dem Hängetaschenlager 1 angebracht, vorzugsweise innerhalb oder an Kreuzungen, vorzugsweise an Übergängen zwischen einem Lagerbereich und Straßen, insbesondere Rangierstraßen zum Umlagern und/oder Schnellstraßen zum schnellen Transportieren der Hängetaschen 5.

Obwohl bevorzugt die Baken II im Grundsatz genauso wie jede der Hängetaschen 5 und die Baken I für das Aufbauen des jeweiligen Kommunikationswegs A eingerichtet sind, sind diese hierarchisch einer bestimmten der Baken I nachgeschaltet, bzw. werden exklusiv nur von diesen angesprochen. Dies erfolgt via den jeweiligen funkbasierten Strecken 213. Die ortsfeste Zuordnung hat den Vorteil, dass die Wegbildung für den Kommunikationsweg A zu einer der Baken II stets entsprechend der Hierarchie der Lagen eins bis vier vorgegeben ist bzw. durch einen Algorithmus dynamisch und/oder selbstlernend vorgebbar ist. Vorzugsweise sind die Baken sowie die Hängetaschen 5 mit identischen Hardwareeinheiten ausgerüstet, wobei die jeweilige Funktion, insbesondere das Routing der Botschaften 217, dynamisch durch eine entsprechende Einrichtung und/oder Programmierung erfolgen können, insbesondere selbstlernend und/oder selbstoptimierend. Es ist also vom Grundsatz jeder beliebige Weg einer Botschaft über die fünf Lagen hinweg denkbar, jedoch werden sich im Laufe der Verwendung sinnvolle Wege herausstellen, die dann bevorzugt verwendet werden können und insbesondere über die ortsfesten Baken I und II verlaufen. Auch diese Wege können von einem Ort des Adressaten 215 abhängen, sind dann jedoch im Laufe des Lernvorgangs pro Ort jeweils gleich, was Ressourcen hinsichtlich Routing einspart und optimierte Wege für die jeweiligen Botschaften 217 ermöglicht.

Erst in einer fünften Lage ist die Wegbildung bzw. das Routing zur Übermittlung der Botschaft 217 völlig frei, insbesondere pro Routing-Vorgang vom jeweiligen Ort des Adressaten 215 innerhalb des Hängetaschenlagers 1 abhängig, und kann über eine beliebige Anzahl weiterer der Hängetaschen 5 bis zu dem Adressaten 215 geführt werden, was beispielhaft für eine Botschaft 217 in Fig. 6 eingezeichnet ist, wobei die Botschaft 217 über zwei weitere der Hängetaschen 5 übermittelt wird.

Mittels der Aufgliederung der ersten Kommunikationsanordnung 201 in einen festverdrahteten Teil - Lagen eins bis drei - einen zumindest nach einem Lernvorgang vorgegebene Kommunikationsteilwege aufweisenden Teil - Lagen eins bis vier - und einen bezüglich der Wegbildung freien Teil - Lage fünf - kann eine besonders hohe Anzahl der Hängetaschen 5 an einem beliebigen Ort des Hängetaschenlagers 5 mit einer besonders niedrigen Sendeleistungsdichte ortsunabhängig adressiert werden. Dabei ist die Sendeleistungsdichte vergleichsweise gering, da zum Übermitteln der jeweiligen Botschaft 217 viele kurze Strecken 213 verwendet werden und/oder teils festverdrahtet und teils flexibel aufgebaut werden.

Gemäß einer möglichen Alternative ist es denkbar, bedarfsweise Botschaften direkt von der dritten Lage, also einer der Baken I direkt zu einem Adressaten 215, also unter Umgehung der vierten Lage direkt an die fünfte Lage zu senden, was in Fig. 6 links angedeutet ist. Dies kann auf Ausnahmefälle beschränkt sein, bei denen der Adressat 215 sich besonders nahe an einer der Baken I befindet.

Die zweite Kommunikationsanordnung 203 ist in drei Lagen unterteilt, wobei die erste Lage ebenfalls die zentrale Steuereinrichtung 25 aufweist, also mit der ersten Lage des Kommunikationswegs A bzw. der ersten Kommunikationsanordnung 201 übereinstimmt.

Dieser nachgeschaltet bzw. untergeordnet weist eine zweite Lage der zweiten Kommunikationsanordnung 203 zumindest eine, vorzugsweise eine Vielzahl der Baken III auf, insbesondere pro Ringförderanlage 23 pro Ebene 9, 13 jeweils eine, beispielweise zwischen zwei und 100 Stück, vorzugsweise circa 10 Stück pro Ringförderanlage 23.

In einer dritten Lage der zweiten Kommunikationsanordnung 203 sind die Hängetaschen 5 bzw. die Adressaten 215 angeordnet, wobei die dritte Lage der zweiten Kommunikationsanordnung 203 mit der fünften Lage der ersten Kommunikationsanordnung 201 übereinstimmt.

Die Baken III der zweiten Lage der zweiten Kommunikationsanordnung 203 sind der Steuereinrichtung 25 festverdrahte nachgeschaltet. Von der zweiten Lage werden die Hängetaschen 5 bzw. die Adressaten 215 direkt angesprochen, sobald diese sich in einer Reichweite der jeweiligen Bake III befinden, was in den Fig. 6 und 7 mittels eines gestrichelt dargestellten Teilkreislinie angedeutet ist.

In Fig. 7 sind beispielhaft sechs der Hängetaschen 5 in der Reichweite der Bake III, was mittels Fettdruck angedeutet ist. Dabei kann die Bake III quasi zeitgleich und/oder zeitlich gemultiplext alle sechs der Hängetaschen 5 ansprechen und Botschaften 217 mit diesen austauschen.

Fig. 8 zeigt ein Ablaufdiagramm eines Verfahrens zum Betreiben eines mit zumindest teilautonom oder autonom fahrbaren Hängetaschen ausgestatteten Hängetaschenlagers.

In einem ersten Schritt 219 werden die Hängetaschen 5 zumindest teilautonom oder autonom auf dem Netz 49 bewegt bzw. gefahren. Die Botschaften 217 können zum Steuern des zumindest teilautonomen Fahrens Ziele aufweisen, die in einem zweiten Schritt 221, vorzugsweise kabellos, an die Adressaten 215 übergeben werden können, die dann diese Ziele teilautonom oder autonom ansteuern. Die Botschaften 217 können wahlweise, insbesondere abhängig von einer Aufgabe und/oder einem Ort in dem Hängetaschenlager 1, über den Kommunikationsweg A oder den davon unabhängigen Kommunikationsweg B übergeben werden.

Optional ist es denkbar, einen Handshake durchzuführen, sobald sich eine jeweilige der Hängetaschen 5 innerhalb einer Reichweite einer der Baken III befindet und die Steuerung der jeweiligen der Hängetaschen 5 über den Kommunikationsweg B zu übernehmen, insbesondere zum Durchführen eines Sortiervorgangs, Auslagervorgangs und/oder Einlagerungsvorgangs des Hängetaschenlagers 1 über diesen Kommunikationsweg B zu übernehmen.

Ferner ist es denkbar, die für den Kommunikationsweg B eingerichteten zweiten Sendeempfangsvorrichtungen 207 der Hängetaschen 5 zusätzlich für eine Fahrdynamikregelung, Abstandsregelung und/oder Kollisionsvermeidung untereinander zu verwenden.

Es versteht sich von selbst, dass diese Beschreibung verschiedensten Modifikationen, Änderungen und Anpassungen unterworfen werden kann, die sich im Bereich von Äquivalenten zu den anhängenden Ansprüchen bewegen.

### Bezugszeichenliste

- 1: Hängetaschenlager
- 3: Lagergut
- 5: Hängetasche
- 7: erster Übergabepuffer
- 9: erste Ebene
- 11: zweiter Übergabepuffer
- 13: zweite Ebene
- 15: Reihenfolge
- 23: Ringförderanlage
- 25: Steuereinrichtung
- 27: Linie
- 49: Netz
- 51: Doppelpfeil
- 53: Übergabestelle
- 55: Entladestation
- 57: Räder
- 59: Antriebsenergie
- 61: Rolladapter
- A: Kommunikationsweg
- B: Kommunikationsweg
- I: Bake
- II: Bake
- III: Bake
- 201: erste Kommunikationsanordnung
- 203: zweite Kommunikationsanordnung
- 205: erste Sendeempfangsvorrichtung
- 207: zweite Sendeempfangsvorrichtung
- 209: Zwischensteuerung
- 211: Randbereich
- 213: Strecke
- 215: Adressat
- 217: Botschaft
- 219: erster Schritt
- 221: zweiter Schritt

## Patentansprüche

1. Hängetaschenlager (1) zum Lagern, Kommissionieren, Sortieren und Auslagern von Lagergütern (3), umfassend
eine Vielzahl an Rolladaptern (61) und an den Rolladaptern (61) aufhängbaren oder aufgehängten Hängetaschen (5), wobei die Rolladapter (61) oder die Hängetaschen (5) jeweils eine mitfahrende Längs- und Querdynamiksteuerung aufweisen und wobei in die Hängetaschen (5) jeweils zumindest eines der Lagergüter (3) aufnehmbar und wieder auslagerbar ist,
ein Netz (49), auf dem die Vielzahl an Hängetaschen (5) oder an den Rolladaptern (61) aufgehängten Hängetaschen (1) mittels der jeweils mitfahrenden Längs- und Querdynamiksteuerung autonom oder zumindest teilautonom fahrbar sind,
eine Steuereinrichtung (25), mittels der das Hängetaschenlager (1) steuerbar und/oder überwachbar ist und/oder das Lagern, Kommissionieren und Sortieren der Lagergüter (3) steuerbar und eine Reihenfolge (15) der Lagergüter (3) für eine Auslagerung der Lagergüter (3) vorgebbar ist,
eine erste Kommunikationsanordnung (201), mittels der ein Kommunikationsweg A zwischen der Steuereinrichtung (25) und einem Adressaten (215) wie einer beliebigen, einzelnen der Hängetaschen (5) aufbaubar ist,
**gekennzeichnet durch**
eine zweite Kommunikationsanordnung (203), mittels der ein vom Kommunikationsweg A unabhängiger weiterer Kommunikationsweg B zwischen der Steuereinrichtung (25) und dem Adressaten (215) aufbaubar ist,
wobei die Hängetaschen (5) und/oder die Rolladapter (61) und/oder der Adressat (215) mittels und wahlweise durch die Verwendung von einem oder zwei der zwei Kommunikationswege A und B durch die Steuereinrichtung (25) jeweils wahlfrei adressierbar, ansprechbar und/oder steuerbar sind/ist, wobei der Kommunikationsweg A über eine erste größere Distanz aufbaubar und der Kommunikationsweg B über eine zweite kleinere Distanz aufbaubar ist und die Kommunikationswege A und B für diese unterschiedlichen Distanzen ausgelegt sind.

2. Hängetaschenlager nach Anspruch 1, **dadurch gekennzeichnet, dass** die Kommunikationsanordnungen (201, 203) zumindest eines oder eine Vielzahl an Elementen aus der folgenden Gruppe aufweisen:
eine Hängetasche (5) und/oder einen Rolladapter (61) mit einer mitfahrenden und für den Kommunikationsweg A eingerichteten ersten Sendeempfangsvorrichtung (205) sowie einer mitfahrenden und für den Kommunikationsweg B eingerichteten zweiten Sendeempfangsvorrichtung (207),
die Steuereinrichtung (25), ausgelegt oder eingerichtet zum zentralen Steuern des Hängetaschenlagers (1), Generieren, Aussenden und/oder Empfangen von Botschaften über die Kommunikationswege A und B,
eine Vielzahl von Zwischensteuerungen (209), die der Steuereinrichtung (25) nachgeschaltet, jeweils mit einer eigenen Rechenkapazität ausgestattet und für den Kommunikationsweg A eingerichtet sind,
ein Cluster von zwei bis 10, vorzugsweise zwei bis sechs, bevorzugt vier, Baken I, das einer der Zwischensteuerungen (209) nachgeschaltet ist, wobei die Baken I jeweils für den Kommunikationsweg A eingerichtet sind,
ein Cluster von zwei bis 10, vorzugsweise zwei bis sechs, bevorzugt drei, Baken II, das einer der Baken I nachgeschaltet ist, wobei die Baken II für den Kommunikationsweg A eingerichtet sind,
eine Vielzahl von Baken III, die der Steuereinrichtung (25) nachgeschaltet und für den Kommunikationsweg B eingerichtet sind.

3. Hängetaschenlager nach Anspruch 1 oder 2, **dadurch gekennzeichnet, dass** der Kommunikationsweg A von der Steuereinrichtung (25) zu dem Adressaten (215) über
eine der Zwischensteuerungen (209),
eine der Baken I,
eine der Baken II,
oder direkt von einer der Baken I, mittels denen jeweils eine Strecke (213) zu dem Adressaten (215) und/oder der Bake II aufbaubar ist, und/oder
eine Vielzahl der Hängetaschen (5)
zu dem Adressaten (215) führbar ist, und der Kommunikationsweg B unabhängig davon von der Steuereinrichtung (25) über eine der Baken III zu dem Adressaten (215) führbar ist, wobei die Kommunikationswege A und B unterschiedliche Kommunikationsprotokolle und/oder Strecken (213) und/oder Funkfrequenzen aufweisen.

4. Hängetaschenlager nach einem der Ansprüche 1 bis 3, **dadurch gekennzeichnet, dass** das Hängetaschenlager (1) für mindestens 10.000, bevorzugt mindestens 500.000, insbesondere mindestens 750.000, mindestens 1.000.000, mindestens 1.500.000, vorzugsweise zwischen 500.000 und 1.500.000, der Hängetaschen (5) ausgelegt ist und/oder diese aufweist, wobei die Hängetaschen (5) und/oder die Rolladapter (61) und/oder der Adressat (215) mittels und durch die Verwendung der zwei Kommunikationswege A und B durch die Steuereinrichtung (25) jeweils wahlfrei adressierbar, ansprechbar und/oder steuerbar sind.

5. Hängetaschenlager nach einem der Ansprüche 1 bis 4, **dadurch gekennzeichnet, dass** eine Dichte der Hängetaschen (5) und/oder der Rolladapter (61) auf dem Netz (49) in einer X-Richtung und/oder Fahrtrichtung gesehen und bei einer Kolonnenfahrt oder einer Lagerung im Stillstand, bis zu 20 der Hängetaschen (5), insbesondere zwischen 10 und 20 der Hängetaschen (5) pro Meter beträgt und/oder das Netz (49) eine Vielzahl an in einer Y-Richtung und/oder Z-Richtung gesehen eine Vielzahl an parallel angeordneten Fahrwegen mit dieser Dichte aufweist, wobei die Hängetaschen (5) und/oder die Rolladapter (61) und/oder der Adressat (215) mittels und durch die Verwendung der zwei Kommunikationswege A und B durch die Steuereinrichtung (25) jeweils wahlfrei adressierbar, ansprechbar und/oder steuerbar sind.

6. Hängetaschenlager nach einem der Ansprüche 2 bis 5, **dadurch gekennzeichnet, dass** die Baken I, die Baken II sowie die Hängetaschen (5) jeweils eine der für den Kommunikationsweg A eingerichtete erste Sendeempfangsvorrichtung (205) aufweisen, die wahlweise zum Empfangen, Senden oder Weitergeben von Botschaften (217) eingerichtet sind, wobei eine Anzahl der verwendeten Sendeempfangsvorrichtungen (205) zum Übermitteln einer einzelnen Botschaft (217) über den Kommunikationsweg A flexibel ist.

7. Hängetaschenlager nach einem der Ansprüche 2 bis 6, **dadurch gekennzeichnet, dass** die Zwischensteuerungen (209) der Steuereinrichtung (25) festverdrahtet nachgeschaltet sind, die Cluster der Baken I der jeweiligen Zwischensteuerung (209) festverdrahtet nachgeschaltet sind, die Cluster der Baken II der jeweiligen Bake I über eine bevorzugt etablierbare der Strecken (213) oder festverdrahtet nachgeschaltet oder nachschaltbar sind und der Adressat (215) über eine der Baken II oder von der Bake II über eine beliebige Anzahl weiterer der Hängetaschen (5) adressierbar und/oder ansprechbar ist.

8. Hängetaschenlager nach einem der Ansprüche 2 bis 7, **dadurch gekennzeichnet, dass** die Baken III sowie die zweiten Sendeempfangsvorrichtungen (207) der Hängetaschen (5) den Standard Bluetooth Low Energy (BLE) aufweisen und der Kommunikationsweg B entsprechend dieses Standards etablierbar ist.

9. Hängetaschenlager nach einem der Ansprüche 1 bis 8, **dadurch gekennzeichnet, dass** der Kommunikationsweg A über eine erste größere Distanz oder die erste größere Distanz, die im Bereich des gesamten Hängetaschenlagers (1) verläuft, aufbaubar ist und der Kommunikationsweg B über eine zweite kleinere Distanz oder die zweite kleinere Distanz, die in Bereichen des Hängetaschenlagers (1) mit einem hohen Kommunikationsaufwand verläuft, und/oder bei Förderanlagen und Sortiervorrichtungen mit dem hohen Kommunikationsaufwand innerhalb des Hängetaschenlagers, aufbaubar ist.

10. Hängetaschenlager nach einem der Ansprüche 1 bis 9, **dadurch gekennzeichnet, dass** der Kommunikationsweg A ein hochflexibles und/oder selbstlernendes Meshnet aufweist, und/oder dass eine Hierarchie des Kommunikationswegs A durch einen Selbstlernvorgang adaptierbar und/oder erzeugbar ist.

11. Hängetaschenlager nach einem der Ansprüche 1 bis 10, **dadurch gekennzeichnet, dass** die Kommunikationswege A und B unterschiedliche Zeitverhalten aufweisen, und/oder der Kommunikationsweg A ein an das Lagern in Ruhe und Adressieren angepasstes, vergleichsweise langsameres Zeitverhalten als der Kommunikationsweg B aufweist, und/oder dass der Kommunikationsweg B ein an das Sortieren oder Sortieren und Steuern bei Förderanlagen und Sortiervorrichtungen mit einem hohen Kommunikationsaufwand innerhalb des Hängetaschenlagers (1) angepasstes, schnelleres Zeitverhalten als der Kommunikationsweg A aufweist.

12. Verfahren zum Betreiben eines mit zumindest teilautonom oder autonom fahrbaren Hängetaschen (5) ausgestatteten Hängetaschenlagers (1), insbesondere eines Hängetaschenlagers (1) nach einem der Ansprüche 1 bis 11, umfassend
zumindest teilautonomes Fahren der Hängetaschen (5),
**gekennzeichnet durch**:
kabelloses Übergeben von Botschaften (217) an die Hängetaschen (5) zum Steuern des zumindest teilautonomen Fahrens über einen Kommunikationsweg A und einen davon unabhängigen Kommunikationsweg B,
Aufbauen des Kommunikationswegs A über eine erste größere Distanz und des Kommunikationswegs B über eine zweite kleinere Distanz, wobei die Kommunikationswege A und B für diese unterschiedlichen Distanzen ausgelegt sind.

13. Verfahren nach Anspruch 12, **gekennzeichnet durch**:
Durchführen eines Handshakes, sobald sich eine jeweilige der Hängetaschen (5) innerhalb einer Reichweite einer der Baken III befindet,
Übernehmen der Steuerung der jeweiligen der Hängetaschen (5) über den Kommunikationsweg B zum Durchführen eines Sortiervorgangs, Auslagervorgangs und/oder Einlagerungsvorgangs des Hängetaschenlagers (1).

14. Verfahren nach einem der Ansprüche 12 oder 13, **gekennzeichnet durch**:
zusätzliches Verwenden der für den Kommunikationsweg B eingerichteten zweiten Sendeempfangsvorrichtungen (207) der Hängetaschen (5) und/oder der Rolladapter (61) für eine Fahrdynamikregelung, Abstandsregelung und/oder Kollisionsvermeidung untereinander und/oder dazu
zusätzliches Verbinden der Hängetaschen (5) und/oder der Rolladapter (61) über den Kommunikationsweg B und/oder ein Protokoll des Kommunikationswegs B miteinander für die Fahrdynamikregelung, Abstandsregelung und/oder Kollisionsvermeidung.

15. Verfahren nach einem der Ansprüche 12 bis 14, **gekennzeichnet durch**:
wahlweise Übermitteln einer Nachricht oder Übermitteln einer Nachricht über den Kommunikationsweg A an nur eine der Hängetaschen (5) und/oder Rolladapter (61) und/oder den Adressaten (215) oder gleichzeitig an mehrere der Hängetaschen (5) und/oder der Rolladapter (61).

## Claims

1. A hanging bag storage (1) for storing, picking, sorting and retrieving storage articles (3), comprising:
a plurality of roll adapters (61) and hanging bags (5) suspendible or suspended on the roll adapters (61), wherein the roll adapters (61) or the hanging bags (5) each comprise a cotraveling longitudinal and transverse dynamics control and wherein at least one of the storage articles (3), respectively, can be received and retrieved again in the hanging bags (5),
a network (49), on which the plurality of hanging bags (5) or hanging bags (1) suspended on the roll adapters (61) can be moved autonomously or at least partially autonomously each using the cotraveling longitudinal and transverse dynamics control,
a control device (25), by which the hanging bag storage (1) can be controlled and/or monitored and/or the storing, picking and sorting of the storage articles (3) can be controlled and a sequence (15) of the storage articles (3) for a retrieval of the storage articles (3) can be specified,
a first communication configuration (201), by which a communication path A between the control device (25) and an addressee (215) such as a random, individual one of the hanging bags (5) can be set up,
**characterized by**
a second communication configuration (203), by which another communication path B, which is independent of the communication path A, can be set up between the control device (25) and the addressee (215),
wherein the hanging bags (5) and/or the roll adapters (61) and/or the addressee (215) can each be electively addressed, communicated with and/or controlled by the control device (25) by and electively using one or two of the two communication paths A and B, wherein the communication path A can be set up over a first greater distance and the communication path B can be set up over a second smaller distance and the communication paths A and B are configured for these different distances.

2. The hanging bag storage according to claim 1, **characterized in that** the communication configurations (201, 203) comprise at least one or a plurality of elements from the following group:
a hanging bag (5) and/or a roll adapter (61) with a cotraveling first transceiving device (205) configured for the communication path A and a cotraveling second transceiving device (207) configured for the communication path B,
the control device (25), designed or configured for centrally controlling the hanging bag storage (1), generating, sending and/or receiving messages using the communication paths A and B,
a plurality of intermediate controllers (209), which are arranged downstream of the control device (25), each equipped with an independent computing capacity and configured for the communication path A,
a cluster of two to 10, preferably two to six, preferably four, beacons I, which is arranged downstream of one of the intermediate controllers (209), wherein the beacons I are each configured for the communication path A,
a cluster of two to 10, preferably two to six, preferably three, beacons II, which is arranged downstream of one of the beacons I, wherein the beacons II are configured for the communication path A,
a plurality of beacons III, which are arranged downstream of the control device (25) and configured for the communication path B.

3. The hanging bag storage according to claim 1 or 2, **characterized in that** the communication path A from the control device (25) to the addressee (215) can be set up using
one of the intermediate controllers (209),
one of the beacons I,
one of the beacons II,
or directly from one of the beacons I, by which respectively one route (213) to the addressee (215) and/or the beacon II can be set up, and/or
a plurality of the hanging bags (5)
can be directed to the addressee (215), and, independent of that, the communication path B can be directed from the control device (25) using one of the beacons III to the addressee (215), wherein the communication paths A and B have different communication protocols and/or routes (213) and/or radio frequencies.

4. The hanging bag storage according to any one of the claims 1 to 3, **characterized in that** the hanging bag storage (1) is designed for and/or comprises at least 10,000, preferably at least 500,000, in particular at least 750,000, at least 1,000,000, at least 1,500,000, preferably between 500,000 and 1,500,000, of the hanging bags (5), wherein the hanging bags (5) and/or the roll adapters (61) and/or the addressee (215) can each be electively addressed, communicated with and/or controlled by the control device (25) by and using the two communication paths A and B.

5. The hanging bag storage according to any one of the claims 1 to 4, **characterized in that** a density of the hanging bags (5) and/or the roll adapters (61) on the network (49) viewed in an x-direction and/or direction of travel and in case of a traveling in convoy or a storage in standstill, is up to 20 of the hanging bags (5), in particular between 10 and 20 of the hanging bags (5), per meter and/or the network (49) comprises a plurality of travel paths with this density arranged in parallel viewed in a y-direction and/or z-direction, wherein the hanging bags (5) and/or the roll adapters (61) and/or the addressee (215) can each be electively addressed, communicated with or controlled by the control device (25) by and using the two communication paths A and B.

6. The hanging bag storage according to any one of the claims 2 to 5, **characterized in that** the beacons I, the beacons II and the hanging bags (5) each comprise one of the first transceiving devices (205) configured for the communication path A, which are electively configured for receiving, sending or relaying messages (217), wherein a number of the transceiving devices (205) used for transmitting an individual message (217) by the communication path A is flexible.

7. The hanging bag storage according to any one of the claims 2 to 6, **characterized in that** the intermediate controllers (209) are arranged hardwired downstream of the control device (25), the clusters of the beacons I are arranged hardwired downstream of the respective intermediate controller (209), the clusters of the beacons II are arranged or arrangeable hardwired downstream of the respective beacon I using a preferably establishable one of the routes (213) and the addressee (215) can be addressed and/or communicated with using one of the beacons II or by the beacon II using any number of other ones of the hanging bags (5).

8. The hanging bag storage according to any one of the claims 2 to 7, **characterized in that** the beacons III and the second transceiving devices (207) of the hanging bags (5) have the Bluetooth Low Energy (BLE) standard and the communication path B can be established according to this standard.

9. The hanging bag storage according to any one of the claims 1 to 8, **characterized in that** the communication path A can be set up over a first greater distance or over the first greater distance which extends in the region of the entire hanging bag storage (1) and the communication path B can be set up over a second smaller distance or over the second smaller distance which extends in regions of the hanging bag storage (1) with a high communication requirement and/or inside the hanging bag storage at conveying systems and sorting devices with the high communication requirement.

10. The hanging bag storage according to any one of the claims 1 to 9, **characterized in that** the communication path A has a highly flexible and/or self-learning Meshnet, and/or that a hierarchy of the communication path A can be adapted and/or generated by a self-learning operation.

11. The hanging bag storage according to any one of the claims 1 to 10, **characterized in that** the communication paths A and B have different time responses, and/or the communication path A has a relatively slower time response than the communication path B, which time response is adapted to the storing at rest and addressing, and/or that the communication path B has a faster time response than the communication path A, which time response is adapted to the sorting or sorting and controlling in conveying systems and sorting devices with a high communication requirement inside the hanging bag storage (1).

12. A method for operating a hanging bag storage (1) equipped with at least partially autonomously or autonomously movable hanging bags (5), in particular a hanging bag storage (1) according to any one of the claims 1 to 11, comprising
at least partially autonomous moving of the hanging bags (5),
**characterized by**:
wireless handing over of messages (217) to the hanging bags (5) for controlling the at least partially autonomous moving using a communication path A and a communication path B independent thereof,
establishing the communication path A over a first larger distance and the communication path B over a second smaller distance, wherein the communication paths A and B are configured for these different distances.

13. The method according to claim 12, **characterized by**:
executing a handshake as soon as a respective one of the hanging bags (5) is within a range of one of the beacons III,
taking over the control of the respective one of the hanging bags (5) using the communication path B for executing a sorting operation, retrieval operation and/or storage operation of the hanging bag storage (1).

14. The method according to any one of the claims 12 or 13, **characterized by**:
additionally using the second transceiving devices (207) of the hanging bags (5) and/or the roll adapters (61) configured for the communication path B for a travel dynamic control, a distance control and/or collision avoidance among one another and/or
additionally interconnecting the hanging bags (5) and/or the roll adapters (61) using the communication path B and/or a protocol of the communication path B for the travel dynamic control, distance control and/or collision avoidance.

15. The method according to any one of the claims 12 to 14, **characterized by**:
electively transmitting a message or transmitting a message using the communication path A to only one of the hanging bags (5) and/or roll adapters (61) and/or to the addressee (215) or simultaneously to multiple of the hanging bags (5) and/or the roll adapters (61).

## Revendications

1. Magasin à sacs suspendus (1) permettant l'entreposage, la préparation de commandes, le tri et la récupération de marchandises entreposées (3), comprenant
une pluralité d'adaptateurs à rouleau (61) et de sacs suspendus (5) suspendus ou pouvant être suspendus aux adaptateurs à rouleau (61), dans lequel les adaptateurs à rouleau (61) ou les sacs suspendus (5) présentent respectivement une commande dynamique longitudinale et transversale les accompagnant et dans lequel respectivement au moins une des marchandises entreposées (3) peut être accueillie et à nouveau récupérée dans les sacs suspendus (5),
un réseau (49) sur lequel la pluralité de sacs suspendus (5) ou de sacs suspendus (1) suspendus aux adaptateurs à rouleau (61) peuvent être déplacés de manière autonome ou au moins partiellement autonome au moyen de la commande dynamique longitudinale et transversale les accompagnant,
un dispositif de commande (25) au moyen duquel le magasin à sacs suspendus (1) peut être commandé et/ou surveillé et/ou au moyen duquel l'entreposage, la préparation de commandes et le tri des marchandises entreposées (3) peuvent être commandés et une séquence (15) des marchandises entreposées (3) peut être prédéfinie pour une récupération des marchandises entreposées (3),
un premier dispositif de communication (201) au moyen duquel une voie de communication A peut être établie entre le dispositif de commande (25) et un interlocuteur (215) tel que l'un quelconque individuel des sacs suspendus (5), **caractérisé par**
un deuxième dispositif de communication (203) au moyen duquel une autre voie de communication B indépendante de la voie de communication A peut être établie entre le dispositif de commande (25) et l'interlocuteur (215),
dans lequel les sacs suspendus (5) et/ou les adaptateurs à rouleau (61) et/ou l'interlocuteur (215) peu(ven)t être adressé(s), pris en charge et/ou commandé(s) de manière respectivement aléatoire grâce au dispositif de commande (25) en utilisant au choix une ou deux des deux voies de communication A et B, dans laquelle la voie de communication A peut être établie sur une première distance plus grande et la voie de communication B peut être établie sur une deuxième distance plus petite et les voies de communication A et B sont conçues pour ces différentes distances.

2. Magasin à sacs suspendus selon la revendication 1, **caractérisé en ce que** les dispositifs de communication (201, 203) présentent au moins un ou plusieurs élément(s) appartenant au groupe ci-dessous :
un sac suspendu (5) et/ou un adaptateur à rouleau (61) avec un premier dispositif émetteur-récepteur (205) l'accompagnant et configuré pour la voie de communication A, ainsi qu'un deuxième dispositif émetteur-récepteur (207) l'accompagnant et configuré pour la voie de communication B,
le dispositif de commande (25), conçu ou configuré pour commander de manière centralisée le magasin à sacs suspendus (1), et générer, envoyer et/ou recevoir des messages via les voies de communication A et B,
une pluralité de commandes intermédiaires (209), qui sont connectées en aval du dispositif de commande (25) et sont respectivement équipées de leur propre capacité de calcul et sont configurées pour la voie de communication A,
une grappe de deux à 10, de préférence de deux à six, de manière préférée de quatre balises I, qui est connectée en aval d'une des commandes intermédiaires (209), dans lequel les balises I sont respectivement configurées pour la voie de communication A, une grappe de deux à 10, de préférence de deux à six, de manière préférée de trois balises II, qui est connectée en aval d'une des balises I, dans lequel les balises I sont configurées pour la voie de communication A,
une pluralité de balises III, qui sont connectées en aval du dispositif de commande (25) et sont configurées pour la voie de communication B.

3. Magasin à sacs suspendus selon la revendication 1 ou 2, **caractérisé en ce que** la voie de communication A peut être guidée depuis le dispositif de commande (25) jusqu'à l'interlocuteur (215) via
une des commandes intermédiaires (209),
une des balises I,
une des balises II,
ou directement par une des balises I au moyen desquelles respectivement un parcours (213) peut être établi jusqu'à l'interlocuteur (215) et/ou jusqu'à la balise II, et/ou
une pluralité de sacs suspendus (5)
jusqu'à l'interlocuteur (215), et la voie de communication B peut être guidée jusqu'à l'interlocuteur (215) indépendamment de cela depuis le dispositif de commande (25) jusqu'à l'interlocuteur (215) via une des balises III, dans lequel les voies de communication A et B présentent des protocoles de communication et/ou des parcours (213) et/ou des fréquences radio différent(e)s.

4. Magasin à sacs suspendus selon l'une quelconque des revendications 1 à 3, **caractérisé en ce que** le magasin à sacs suspendus (1) est conçu pour et/ou présente au moins 10 000, de manière préférée au moins 500 000, en particulier au moins 750 000, au moins 1 000 000, au moins 1 500 000, de préférence entre 500 000 et 1 500 000 sacs suspendus (5), dans lequel les sacs suspendus (5) et/ou les adaptateurs à rouleau (61) et/ou l'interlocuteur (215) peuvent être adressés, pris en charge et/ou commandés par le dispositif de commande (25) de manière respectivement aléatoire au moyen de et grâce à l'utilisation des deux voies de communication A et B.

5. Magasin à sacs suspendus selon l'une quelconque des revendications 1 à 4, **caractérisé en ce qu'**une densité des sacs suspendus (5) et/ou des adaptateurs à rouleau (61) sur le réseau (49) est considérée dans une direction X et/ou dans une direction de déplacement et, dans le cas d'un déplacement en colonne ou d'un entreposage à l'arrêt, atteint jusqu'à 20 sacs suspendus (5), en particulier est comprise entre 10 et 20 sacs suspendus (5) par mètre et/ou le réseau (49) présente une pluralité de voies de circulation agencées de manière parallèle, considérées dans une direction Y et/ou dans une direction Z, et présentant ladite densité, dans lequel les sacs suspendus (5) et/ou les adaptateurs à rouleau (61) et/ou l'interlocuteur (215) peuvent être adressés, pris en charge et/ou commandés de manière aléatoire au moyen de et grâce à l'utilisation des deux voies de communication A et B par le dispositif de commande (25).

6. Magasin à sacs suspendus selon l'une quelconque des revendications 2 à 5, **caractérisé en ce que** les balises I, les balises II et les sacs suspendus (5) présentent respectivement un premier dispositif d'émission-réception (205) configuré pour la voie de communication A, qui est configuré pour au choix recevoir, émettre ou transmettre des messages (217), dans lequel le nombre des dispositifs d'émission-réception (205) utilisés afin de transmettre un message individuel (217) via la voie de communication A est flexible .

7. Magasin à sacs suspendus selon l'une quelconque des revendications 2 à 6, **caractérisé en ce que** les commandes intermédiaires (209) sont connectées de manière câblée en aval du dispositif de commande (25), les grappes de balises I sont connectées de manière câblée en aval de la commande intermédiaire (209) respective, les grappes de balises II sont connectées, ou peuvent être connectées, de manière câblée ou via un parcours (213) pouvant être établi de manière préférée, en aval de la balise I respective, et l'interlocuteur (215) peut être adressé et/ou pris en charge par l'intermédiaire d'une des balises II ou par la balise II via un nombre quelconque de sacs suspendus (5) supplémentaires.

8. Magasin à sacs suspendus selon l'une quelconque des revendications 2 à 7, **caractérisé en ce que** les balises III ainsi que les deuxièmes dispositifs d'émission-réception (207) des sacs suspendus (5) présentent la norme Bluetooth Low Energy (BLE) et la voie de communication B peut être établie conformément à ladite norme.

9. Magasin à sacs suspendus selon l'une quelconque des revendications 1 à 8, **caractérisé en ce que** la voie de communication A peut être établie sur une première distance plus grande ou sur la première distance plus grande qui s'étend dans une région incluant la totalité du magasin à sacs suspendus (1) et la voie de communication B peut être établie sur une deuxième distance plus petite ou sur la deuxième distance plus petite qui s'étend dans des régions du magasin à sacs suspendus (1) présentant une activité de communication élevée, et/ou, dans le cas d'installations de convoyage et de dispositifs de tri, présentant une activité de communication élevée au sein du magasin à sacs suspendus.

10. Magasin à sacs suspendus selon l'une quelconque des revendications 1 à 9, **caractérisé en ce que** la voie de communication A présente un réseau maillé très flexible et/ou auto-apprenant, et/ou **en ce qu'**une hiérarchie de la voie de communication A peut être adaptée et/ou générée grâce à une opération d'auto-apprentissage.

11. Magasin à sacs suspendus selon l'une quelconque des revendications 1 à 10, **caractérisé en ce que** les voies de communication A et B présentent un comportement temporel différent, et/ou la voie de communication A présente un comportement temporel comparativement plus lent que la voie de communication B et adapté à l'entreposage statique et à l'adressage, et/ou **en ce que** la voie de communication B présente un comportement temporel plus rapide que la voie de communication A et adapté au tri ou au tri et commande dans le cas d'installations de convoyage et de dispositifs de tri présentant une activité de communication élevée au sein du magasin à sacs suspendus (1).

12. Procédé d'exploitation d'un magasin à sacs suspendus (1) équipé de sacs suspendus (5) mobiles de manière autonome ou au moins partiellement autonome, en particulier d'un magasin à sacs suspendus (1) selon l'une quelconque des revendications 1 à 11, comprenant une étape consistant à
déplacer de manière au moins partiellement autonome les sacs suspendus (5), **caractérisé par** les étapes consistant à :
transmettre sans fil des messages (217) aux sacs suspendus (5) afin de commander le déplacement au moins partiellement autonome via une voie de communication A et une voie de communication B indépendante de ladite voie de communication A,
établir la voie de communication A sur une première distance plus grande et la voie de communication B sur une deuxième distance plus petite, dans lequel les voies de communication A et B sont conçues pour lesdites différentes distances.

13. Procédé selon la revendication 12, **caractérisé par** les étapes consistant à :
mettre en œuvre une procédure d'accusé de réception dès que l'un respectif des sacs suspendus (5) se trouve à portée de l'une des balises III,
prendre en charge la commande des sacs suspendus (5) respectifs via la voie de communication B afin de mettre en œuvre une opération de tri, une opération de récupération et/ou une opération d'entreposage du magasin à sacs suspendus (1).

14. Procédé selon l'une quelconque des revendications 12 ou 13, **caractérisé par** les étapes consistant à :
utiliser de manière supplémentaire les deuxièmes dispositifs d'émission-réception (207), configurés pour la voie de communication B, des sacs suspendus (5) et/ou des adaptateurs à rouleau (61) en vue d'une régulation de dynamique de déplacement, d'une régulation d'espacement, et/ou d'un évitement des collisions entre les uns et les autres et/ou en outre
connecter de manière supplémentaire les sacs suspendus (5) et/ou les adaptateurs à rouleau (61) les uns aux autres via la voie de communication B et/ou un protocole de la voie de communication B en vue de la régulation de dynamique de déplacement, de la régulation d'espacement, et/ou de l'évitement des collisions.

15. Procédé selon l'une quelconque des revendications 12 à 14, **caractérisé par** l'étape consistant à :
au choix, transmettre un message ou transmettre un message via la voie de communication A à un seul des sacs suspendus (5) et/ou des adaptateurs à rouleau (61) et/ou à l'interlocuteur (215) ou simultanément à plusieurs des sacs suspendus (5) et/ou des adaptateurs à rouleau (61).
